(19) Europäisches Patentamt
European Patent Office
Office européen des brevets

(11) **EP 3 075 977 B1**

(12) **EUROPEAN PATENT SPECIFICATION**

(45) Date of publication and mention
of the grant of the patent:
**17.01.2018 Bulletin 2018/03**

(51) Int Cl.:
***F01N 3/20*** *(2006.01)*

(21) Application number: **16162404.4**

(22) Date of filing: **24.03.2016**

(54) **EXHAUST PURIFYING APPARATUS FOR INTERNAL COMBUSTION ENGINE**

ABGASREINIGUNGSVORRICHTUNG FÜR EINEN VERBRENNUNGSMOTOR

APPAREIL DE PURIFICATION D'ÉCHAPPEMENT POUR MOTEUR À COMBUSTION INTERNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.04.2015 JP 2015076013**

(43) Date of publication of application:
**05.10.2016 Bulletin 2016/40**

(73) Proprietor: **Toyota Jidosha Kabushiki Kaisha
Aichi-ken Aichi 471-8571 (JP)**

(72) Inventors:
• **TSUCHIYAMA, Makio**
**Aichi-ken, Aichi 471-8571 (JP)**
• **OHTA, Hirohiko**
**Aichi-ken, Aichi 471-8571 (JP)**

(74) Representative: **D Young & Co LLP
120 Holborn
London EC1N 2DY (GB)**

(56) References cited:
**EP-A1- 2 840 240     WO-A1-2015/015260**

**Description**

BACKGROUND OF THE INVENTION

The present invention relates to an exhaust purifying apparatus for an internal combustion engine.

An exhaust purifying apparatus for an internal combustion engine has been known that includes a catalyst that reduces nitrogen oxides (NOx) in exhaust gas using urea water added to the exhaust gas (for example, Japanese Laid-Open Patent Publication No. 2013-142309).

Such an exhaust purifying apparatus has an adding valve that injects urea water into the exhaust passage. The injected urea water is hydrolyzed by the heat of exhaust gas and changed to ammonia. The ammonia is in turn adsorbed by the catalyst for reducing NOx, and the NOx in the exhaust gas is reduced by using the adsorbed ammonia to purify the exhaust gas.

An exhaust passage in which such an exhaust purifying apparatus is installed has a dispersion plate on which urea water injected by the adding valve impinges. Impingement of urea water on the dispersion plate promotes vaporization and atomization of the urea water, which promotes generation of ammonia through hydrolysis of the urea water.

In the steady operation condition of an engine, the direction of flow of exhaust gas is not changed significantly in the exhaust passage. Thus, the urea water injected by the adding valve is likely to continuously impinge on the same spot on the dispersion plate. Such continuous impingement of the urea water on the same spot on the dispersion plate lowers the temperature of the spot. As a result, the urea water is not vaporized and collects on the spot. This may turn the collected urea water into deposit on the spot.

WO 2015/015260 A1 discloses an exhaust gas purification apparatus for an internal combustion engine, the exhaust gas purification apparatus includes a catalyst, a reducing agent supply mechanism, a dispersion plate, and a control unit. The catalyst is configured to purify exhaust gas by adding a reducing agent. The reducing agent supply mechanism is configured to add the reducing agent into an exhaust passage. The dispersion plate is provided in the exhaust passage and is configured to disperse the reducing agent upstream of the catalyst. The control unit is configured to execute addition of the reducing agent by the reducing agent supply mechanism, and the control unit is configured to prohibit the addition of the reducing agent when a temperature of the dispersion plate is lower than a predetermined temperature.

SUMMARY OF THE INVENTION

Accordingly, it is an objective of the present invention to provide an exhaust purifying apparatus for an internal combustion engine that limits temperature drop at a spot of a dispersion plate on which urea water impinges.

To achieve the foregoing objective and in accordance with one aspect of the present invention, an exhaust purifying apparatus for an internal combustion engine is provided that includes an adding valve, which injects urea water into an exhaust passage of the internal combustion engine, a urea water supply passage connected to the adding valve, a dispersion plate provided in the exhaust passage, a catalyst, and a controller. Urea water injected by the adding valve impinges on the dispersion plate. The catalyst removes NOx in exhaust gas by using, as a reducing agent, ammonia generated from the urea water injected by the adding valve. The controller is configured to set an injection timing of the urea water such that the urea water is repeatedly injected from the adding valve at a predetermined injection cycle, thereby causing the adding valve to execute urea water injection. The controller includes a temperature calculating section, which is configured to calculate a temperature of the dispersion plate, a memory section, which is configured to store an injection pressure of the urea water at the urea water injection, a first injection pressure obtaining section, which is configured to obtain, as a first injection pressure, an injection pressure at a previous urea water injection stored in the memory section, a second injection pressure calculating section, and a third injection pressure calculating section. The second injection pressure calculating section is configured to calculate a second injection pressure. The second injection pressure is an injection pressure of urea water obtained in a case in which the urea water is injected when time corresponding to the injection cycle has elapsed from the previous urea water injection. The third injection pressure calculating section is configured to calculate a third injection pressure. The third injection pressure is an injection pressure of urea water obtained in a case in which the urea water is injected at a second timing, which is different from a first timing, which is an injection timing obtained from the injection cycle. The controller is configured to execute a pressure difference increasing process when the temperature of the dispersion plate calculated by the temperature calculating section is lower than a predetermined temperature threshold value, a first pressure difference, which is an absolute value of a difference between the first injection pressure and the second injection pressure, is less than a pressure difference threshold value, and injection of the urea water at the second timing will cause a second pressure difference, which is an absolute value of a difference between the third injection pressure and the first injection pressure, to be greater than the first pressure difference. In the pressure difference increasing process, the controller sets, as the urea water injection timing, the second timing, which is a timing at which the second pressure difference exceeds the first pressure difference.

Other aspects and advantages of the present invention will become apparent from the following description, taken in conjunction with the accompanying drawings, illustrating by way of example the principles of the invention.

BRIEF DESCRIPTION OF THE DRAWINGS

The invention, together with objects and advantages thereof, may best be understood by reference to the following description of the presently preferred embodiments together with the accompanying drawings in which:

Fig. 1 is a schematic diagram of an internal combustion engine to which an exhaust purifying apparatus according to a first embodiment is applied and the surrounding structure;
Fig. 2 is a timing diagram showing operation of the urea adding valve;
Fig. 3 is a diagram showing the direction of injection of urea water injected by the urea adding valve;
Fig. 4 is a timing diagram showing a manner in which urea water injection timing is determined;
Fig. 5 is a timing diagram showing a manner in which pressure pulsation of urea water is damped;
Fig. 6 is a flowchart showing a process of urea water injection in the first embodiment;
Fig. 7 is a conceptual graph showing a map for calculating the heat transfer efficiency of the dispersion plate;
Fig. 8 is a conceptual graph showing a map for calculating the heat release amount of exhaust gas;
Fig. 9 is a timing diagram showing manners in which urea water is injected in the exhaust purifying apparatus according to a second embodiment, where section (A) shows a manner in which a urea adding valve injects urea water at each injection cycle PR, and section (B) shows a manner in which the urea adding valve injects urea water when a pressure difference increasing process is executed to delay the urea water injection timing TT of the present injection from a specified injection timing TTH;
Fig. 10 is a flowchart showing a process of urea water injection in the second embodiment;
Fig. 11 is a timing diagram showing a manner in which urea water is injected according to a third embodiment;
Fig. 12 is a flowchart showing a process of urea water injection in the third embodiment; and
Fig. 13 is a timing diagram showing a manner in which urea water injection timing is determined according to a modification.

DETAILED DESCRIPTION OF THE PREFERRED EMBODIMENTS

First Embodiment

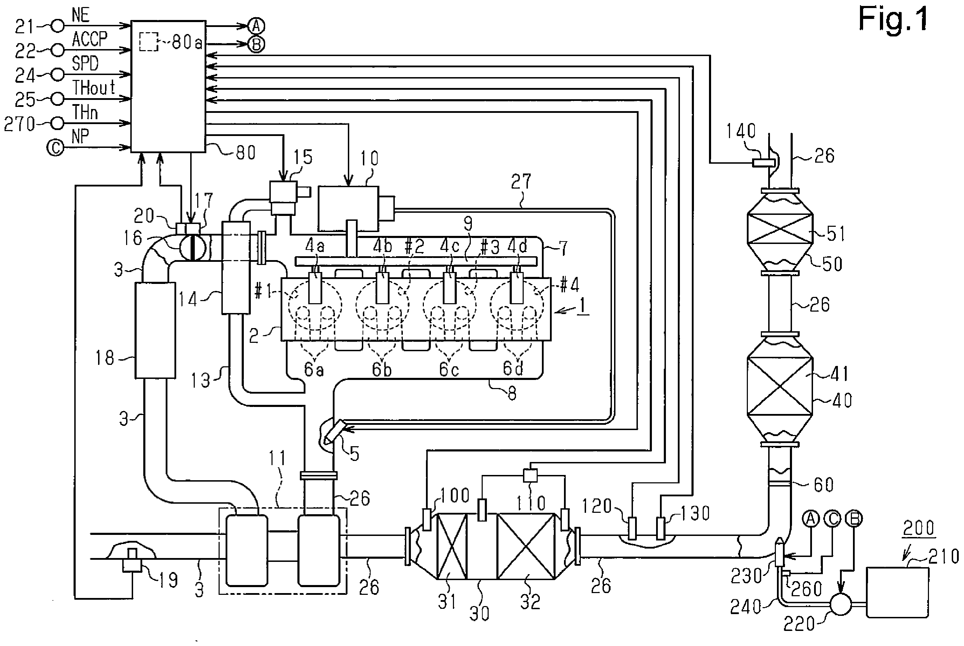

An exhaust purifying apparatus for an internal combustion engine according to a first embodiment will now be described with reference to Figs. 1 to 8.

Fig. 1 shows a diesel engine 1 (hereinafter, simply referred to as an engine 1), to which the exhaust purifying apparatus according to the present embodiment is applied, and the surrounding structure.

The engine 1 includes cylinders #1 to #4. A cylinder head 2 has fuel injection valves 4a to 4d. The fuel injection valves 4a to 4d each inject fuel into a combustion chamber of the corresponding one of the cylinders #1 to #4. The cylinder head 2 also has intake ports (not shown) for introducing new air into the cylinders and exhaust ports 6a to 6d for discharging combustion gas to the outside of the cylinders. The intake ports and the exhaust ports 6a to 6d correspond to the cylinders #1 to #4.

The fuel injection valves 4a to 4d are connected to a common rail 9, which accumulates high-pressure fuel. The common rail 9 is connected to a supply pump 10. The supply pump 10 takes in fuel from the non-illustrated fuel tank and supplies the common rail 9 with the high-pressure fuel. The high-pressure fuel supplied to the common rail 9 is injected into the respective cylinders #1 to #4 from the fuel injection valves 4a to 4d when the fuel injection valves 4a to 4d are opened.

An intake manifold 7 is connected to the intake ports. An intake passage 3 is connected to the intake manifold 7. An intake throttle valve 16 for adjusting the intake air amount is provided in the intake passage 3. The intake manifold 7 configures part of the intake passage 3.

An exhaust manifold 8 is connected to the exhaust ports 6a to 6d. An exhaust passage 26 is connected to the exhaust manifold 8.

A turbocharger 11 is provided in the middle of the exhaust passage 26. The turbocharger 11 supercharges the intake air to be introduced to the cylinders using exhaust gas pressure. An intercooler 18 is provided in the intake passage 3 between the intake-side compressor of the turbocharger 11 and the intake throttle valve 16. The intercooler 18 cools the intake air the temperature of which has been increased by supercharging of the turbocharger 11.

Furthermore, a first purifying member 30, which purifies exhaust gas, is provided in the middle of the exhaust passage 26 and downstream of the exhaust-side turbine of the turbocharger 11. An oxidation catalyst 31 and a filter 32 are arranged in series with respect to the flow direction of the exhaust gas inside the first purifying member 30.

The oxidation catalyst 31 carries a catalyst for oxidation of HC in the exhaust gas. Also, the filter 32 is configured by a porous ceramic, which is a filter that traps particulate matter (PM) in the exhaust gas, and further carries a catalyst for promoting oxidation of the PM. The PM in the exhaust gas is trapped when passing through a porous wall of the filter 32.

A fuel adding valve 5, which adds fuel to exhaust gas, is provided in the vicinity of a collective section of the exhaust manifold 8. The fuel adding valve 5 is connected to the supply pump 10 via a fuel supply pipe 27. The arrangement position of the fuel adding valve 5 may be changed as required as long as it is arranged in the exhaust system and upstream of the first purifying member 30. Fuel may be added to the exhaust gas by performing a post injection by controlling the fuel injection timing.

When the amount of PM trapped by the filter 32 exceeds a predetermined value, a regeneration process of the filter 32 is started so that the fuel adding valve 5 sprays fuel to the exhaust gas in the exhaust manifold 8. The fuel added to the exhaust gas from the fuel adding valve 5 is oxidized when reaching the oxidation catalyst 31 so that the temperature of the exhaust gas is increased. When the exhaust gas, the temperature of which has been increased by the oxidation catalyst 31, flows into the filter 32, the temperature of the filter 32 is increased. This causes the PM accumulated in the filter 32 to be oxidized to regenerate the filter 32.

Also, a second purifying member 40, which purifies the exhaust gas, is provided in the middle of the exhaust passage 26 and downstream of the first purifying member 30. A selective catalytic reduction NOx catalyst (hereinafter, referred to as an SCR catalyst) 41 is provided inside the second purifying member 40. The SCR catalyst 41 functions as a NOx removing catalyst, which reduces NOx in the exhaust gas by using, as a reducing agent, ammonia generated from urea water to purify the exhaust gas.

Furthermore, a third purifying member 50, which purifies the exhaust gas, is provided in the middle of the exhaust passage 26 and downstream of the second purifying member 40. An ammonia oxidation catalyst 51, which oxidizes and removes ammonia in exhaust gas, is provided inside the third purifying member 50.

The engine 1 has a urea water supplying mechanism 200, which functions as an adding mechanism for adding urea water to exhaust gas. The urea water supplying mechanism 200 includes a tank 210 for storing urea water, a urea adding valve 230, which injects urea water into the exhaust passage 26, a urea water supply passage 240, which connects the urea adding valve 230 to the tank 210, and a pump 220 provided in the middle of the urea water supply passage 240.

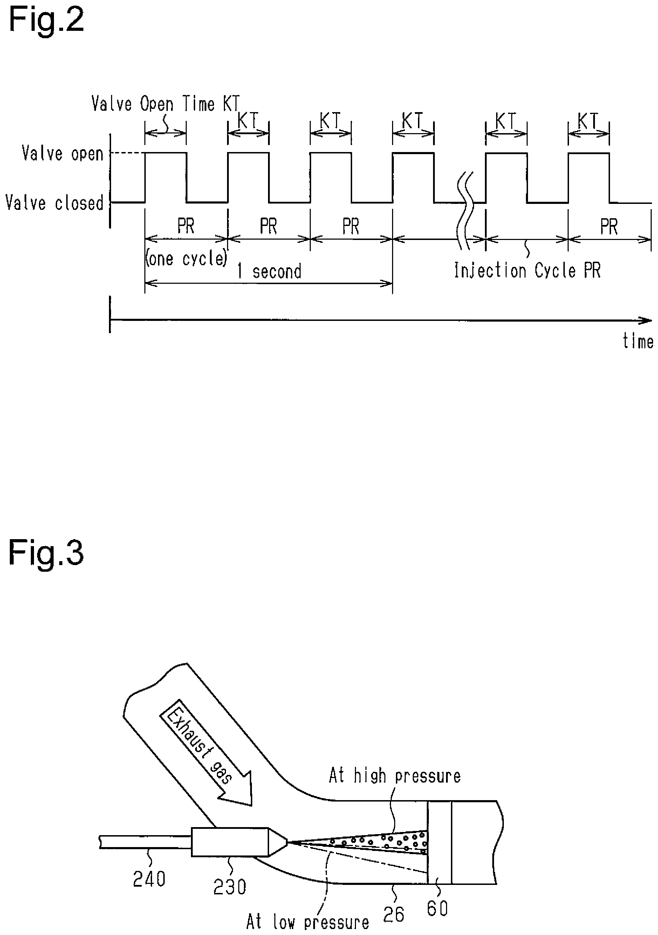

The urea adding valve 230 is located in the exhaust passage 26 between the first purifying member 30 and the second purifying member 40. Specifically, the urea adding valve 230 is located at a position where the exhaust passage 26 is curved as illustrated in Figs. 1 and 3. The urea adding valve 230 has an injection hole facing downstream. When the urea adding valve 230 is opened, urea water is injected into the exhaust passage 26 via the urea water supply passage 240.

The pump 220 is an electric pump, and its rotational speed is controlled such that the injection pressure P of the urea water agrees with a predetermined target pressure. When rotated forward, the pump 220 delivers urea water from the tank 210 toward the urea adding valve 230. When rotated in reverse, the pump 220 delivers urea water from the urea adding valve 230 toward the tank 210. That is, when the pump 220 is rotated in reverse, urea water is collected from the urea adding valve 230 and the supply passage 240 and is returned to the tank 210.

A dispersion plate 60 is provided in the exhaust passage 26 between the urea adding valve 230 and the SCR catalyst 41. The urea water injected by the urea adding valve 230 is caused to impinge on the dispersion plate 60.

The urea water added to the exhaust gas from the urea adding valve 230 is hydrolyzed by the heat of the exhaust gas and turns into ammonia. Impingement of urea water on the dispersion plate 60 promotes vaporization and atomization of the urea water, which promotes the generation of ammonia through hydrolysis of the urea water. When reaching the SCR catalyst 41, the ammonia generated from the urea is adsorbed by the SCR catalyst 41. The NOx in the exhaust gas is reduced by using the ammonia adsorbed by the SCR catalyst 41, so that the exhaust gas is purified.

In addition, the engine 1 is equipped with an exhaust gas recirculation apparatus (hereinafter, referred to as an EGR apparatus). Specifically, the EGR apparatus returns some of the exhaust gas to the intake passage to lower the combustion temperature in the cylinders so that the amount of NOx generated in the engine 1 is reduced. The EGR apparatus includes an EGR passage 13, which connects the intake manifold 7 to the exhaust manifold 8, an EGR valve 15, which is provided in the EGR passage 13, and an EGR cooler 14 located in the EGR passage 13. Adjusting the opening degree of the EGR valve 15 in accordance with the engine operating condition regulates the amount of exhaust gas returned from the exhaust passage 26 to the intake passage 3, that is, an EGR amount. The EGR cooler 14 lowers the temperature of the exhaust gas flowing in the EGR passage 13.

Various types of sensors for detecting the engine operating state are mounted on the engine 1. For example, an air flow meter 19 detects the intake air amount GA in the intake passage 3. A throttle valve opening degree sensor 20 detects the opening degree of the intake throttle valve 16. A crank angle sensor 21 detects the engine speed NE, which is the rotational speed of the crankshaft. An accelerator operation amount sensor 22 detects an accelerator operation amount ACCP, which is the depression amount of the accelerator pedal. A vehicle speed sensor 24 detects a vehicle speed SPD of a vehicle in which the engine 1 is installed. An outside air temperature sensor 25 detects an outside air temperature THout. A pressure sensor 260 is provided in the vicinity of the joint between the urea adding valve 230 and the urea water supply passage 240. The pressure sensor 260 detects a urea pressure NP, which is the pressure of the urea water near the urea adding valve 230. The urea pressure NP when the urea adding valve 230 is open is equal to the injection pressure P of the urea water. A temperature sensor 270 is provided in the urea water supply passage 240 to detect a urea water temperature TH, which is the temperature of the urea water.

Also, a first exhaust gas temperature sensor 100 located upstream of the oxidation catalyst 31 detects a first exhaust gas temperature TH1, which is the temperature of exhaust gas before flowing into the oxidation catalyst 31. A differential pressure sensor 110 detects a pressure difference ΔP between the exhaust gas pressure upstream of the filter 32 and the exhaust gas pressure downstream of the filter 32.

A second exhaust gas temperature sensor 120 and a first NOx sensor 130 are provided in the exhaust passage 26 between the first purifying member 30 and the second purifying member 40, and upstream of the urea adding valve 230. The second exhaust gas temperature sensor 120 detects a second exhaust gas temperature TH2, which is the exhaust gas temperature before flowing into the SCR catalyst 41. The first NOx sensor 130 detects a first NOx concentration N1, which is the NOx concentration in the exhaust gas before flowing into the SCR catalyst 41. Instead of being detected by the first NOx sensor 130, the first NOx concentration N1 may be estimated, for example, based on the engine operating state or the exhaust gas temperature.

A second NOx sensor 140 is provided in the exhaust passage 26 downstream of the third purifying member 50. The second NOx sensor 140 detects a second NOx concentration N2, which is the NOx concentration in the exhaust gas that has been purified by the SCR catalyst 41. Instead of being detected by the second NOx sensor 140, the second NOx concentration N2 may be estimated, for example, based on the engine operating state or the exhaust gas temperature.

The outputs of the various types of sensors are delivered to a control device 80, which functions a controller. The control device 80 is a control circuit or a processor, which is configured by an electronic control unit (ECU), or a microcomputer. The control device 80 includes, for example, a central processing unit (CPU), a read only memory (ROM), which stores various types of programs and maps, a random access memory (RAM), which temporarily stores computation results of the CPU, a nonvolatile memory 80a, in which stored values can be electrically rewritten (for example, an EEPROM), and various types of interfaces. The nonvolatile memory 80a functions as a memory section.

The control device 80 performs various types of control procedures for the engine 1 such as fuel injection amount control and fuel injection timing control of the fuel injection valves 4a to 4d and the fuel adding valve 5, discharge pressure control of the supply pump 10, drive amount control of the actuator 17, which opens and closes the intake throttle valve 16, and opening degree control of the EGR valve 15.

The control device 80 performs various exhaust purification control procedures such as the above-described regeneration process, which burns the PM trapped by the filter 32.

The control device 80 also performs, as one of exhaust gas purification control procedures, urea water addition control using the urea adding valve 230. In the addition control, a required urea adding amount QE, which is necessary for reducing the NOx discharged from the engine 1, is calculated based on, for example, the engine operating state. The opening state of the urea adding valve 230 is controlled such that the amount of urea water corresponding to the calculated required urea adding amount QE is injected by the urea adding valve 230.

When there is a request for addition of urea water, the control device 80 sets the urea water injection timing as shown in Fig. 2, such that the urea adding valve 230 repeatedly injects urea water at a predetermined injection cycle PR, thereby executing the urea water injection using the urea adding valve 230.

Such intermittent addition, in which urea water is repeatedly injected, will now be described.

A drive frequency KS (unit: Hz) is determined based on, for example, the temperature of the SCR catalyst 41. The drive frequency KS is the frequency of the voltage applied to the urea adding valve 230. The value of the drive frequency KS is equal to the number of injections per second by the urea adding valve 230. Based on the drive frequency KS, the injection cycle PR (unit: milliseconds) is calculated using the following expression (1).

$$\text{Injection cycle PR} = 1000 \text{ (milliseconds)/Drive frequency KS} \dots (1)$$

For example, in a case in which the drive frequency KS is 3 Hz as shown in Fig. 2, an open-close operation of the urea adding valve 230 is executed three times per second, and the injection cycle PR is approximately 333 milliseconds. The open-close operation refers to an operation from when the urea adding valve 230 is opened to when the urea adding valve 230 is closed.

Next, a unit urea addition amount QET is calculated based on the following expression (2). The unit urea addition amount QET is the amount of urea addition requested per injection cycle PR.

$$QET = (QE/3600)/KS \ldots (2)$$

QET: Unit urea addition amount (g)
QE: Requested urea addition amount (g/h)
KS: Drive frequency (Hz)

The value of QE/3600 in the expression (2) represents the urea addition amount that needs to be added per second. The value of QE/3600 is divided by the drive frequency KS to obtain the unit urea addition amount QET, which is the unit of urea addition amount required when the urea adding valve 230 is opened once.

The amount of urea water added when the urea adding valve 230 is opened varies in accordance with the urea pressure NP. Thus, a valve open time KT of a single opening of the urea adding valve 230 is calculated based on the urea pressure NP and the unit urea addition amount QET.

The valve open time KT is calculated through the above procedure, so that the urea adding valve 230 injects urea water, the amount of which corresponds to the unit urea addition amount QET in each injection cycle PR. Opening and closing of the urea adding valve 230 are repeated at every injection cycle PR, so that urea water is intermittently added in a pulsing manner.

In the steady operation condition of the engine, the direction of the flow of exhaust gas is not changed significantly in the exhaust passage 26. Thus, the urea water injected by the urea adding valve 230 is likely to continuously impinge on the same spot on the dispersion plate 60. Such continuous impingement of the urea water on the same spot on the dispersion plate 60 lowers the temperature of the spot. As a result, the urea water is not vaporized and collects on the spot. This may turn the collected urea water into deposit on the spot.

In this regard, the control device 80 of the present embodiment executes a pressure difference increasing process described below to prevent the urea water injected by the urea adding valve 230 from continuously impinging on the same spot on the dispersion plate 60.

The pressure difference increasing process will now be described.

In general, exhaust gas swirls or flows in an uneven manner in the exhaust passage 26, and the direction of urea water injection from the urea adding valve 230 is influenced by the stream of the exhaust gas. For example, if the injection pressure P of urea water injected by the urea adding valve 230 is low, the injection direction of the urea water is greatly changed from the injection direction of urea water immediately after the injection from the urea adding valve 230 toward the direction of the flow of exhaust gas. In contrast, if the injection pressure P is high, the injection direction of the urea water is not significantly changed from the injection direction of urea water immediately after the injection from the urea adding valve 230 toward the direction of the flow of exhaust gas. Since the direction of urea water injection changes as the injection pressure P of urea water changes, the part of the dispersion plate 60 on which urea water impinges changes.

In the present embodiment, the urea adding valve 230 is located at a position where the exhaust passage 26 is curved as shown in Fig. 2. At such a position where the exhaust passage 26 is curved, the flow direction of exhaust gas is greatly changed. Accordingly, the direction of urea water injection is greatly changed by the stream of the exhaust gas. Thus, in the present embodiment, compared to a case in which the urea adding valve 230 is located in a straight section of the exhaust passage 26, the amount of change of the direction of urea water injection is changed by a great degree when the injection pressure P of the urea water is changed, so that the part of the dispersion plate 60 on which urea water impinges greatly changes.

Such change in the impingement spot of urea water is reduced as the absolute value of the difference between the injection pressure P of urea water in the previous injection cycle PR and the injection pressure P of urea water in the present injection cycle PR decreases. In contrast, the change in the impingement spot becomes greater as the absolute value of the pressure difference increases.

In the following description, the part of the dispersion plate 60 on which urea water impinges will be referred to as a urea water impingement spot. The urea water injection in the previous injection cycle PR will be referred to as a previous injection, and the urea water injection in the present injection cycle PR will be referred to as a present injection.

In the urea water supply passage 240, which is connected to the urea adding valve 230, periodic pressure change, or pressure pulsation, is caused each time the urea adding valve 230 is closed. Due to the pressure pulsation, the urea water injection pressure P varies depending on the timing at which urea water is injected.

For example, if urea water is injected at the timing when the urea pressure NP, which is the pressure of urea water in the vicinity of the urea adding valve 230, is increased, the urea water injection pressure P is increased. Accordingly, the control device 80 sets the urea water injection timing in accordance with changes in the urea pressure NP due to pressure pulsation, thereby executing the pressure difference increasing process to increase the absolute value of the difference between the urea water injection pressure P at the previous injection and the urea water injection pressure P at the present injection.

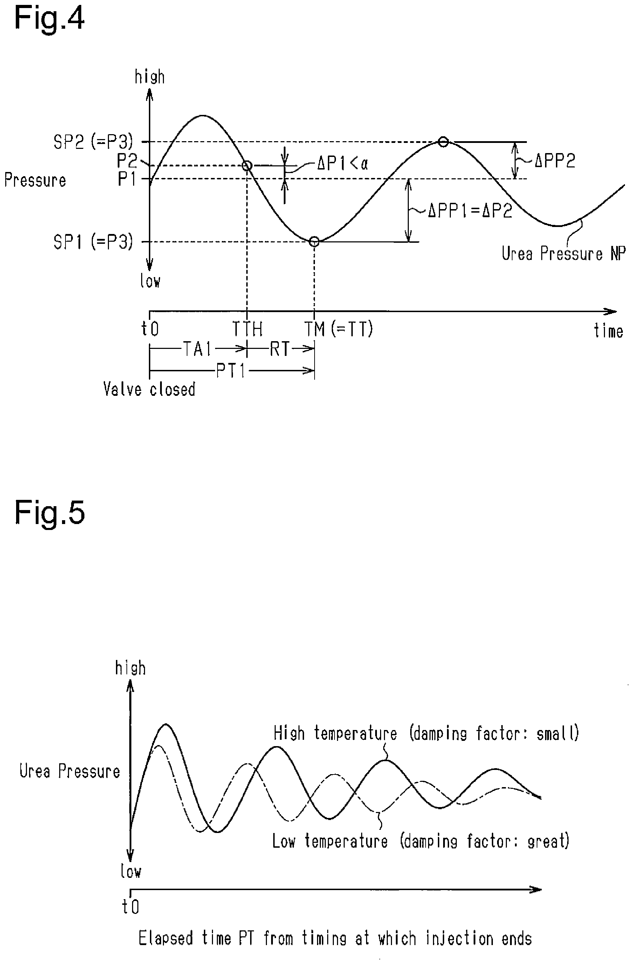

Fig. 4 shows one example of execution of the pressure difference increasing process.

As shown in Fig. 4, when the urea adding valve 230 is opened at a point in time t0, pressure pulsation occurs so that the urea pressure NP starts periodic fluctuation.

The control device 80 adds the injection cycle PR to the previous urea water injection timing to calculate a specified injection timing TTH, which is the urea water injection timing in the present injection cycle PR (first timing). The control device 80 then calculates a second injection pressure P2, which is an estimated value of the injection pressure P when urea water is injected at the specified injection timing TTH. That is, the second injection pressure P2 is an estimated value of the injection pressure P of urea water in a case in which urea water is injected when the injection cycle PR has elapsed from the previous urea water injection. The second injection pressure P2 is equal to the urea pressure NP at the specified injection timing TTH.

A first pressure difference ∆P1 is calculated that is the absolute value of the difference between the first injection pressure P1, which is the injection pressure P of the previous injection, and the second injection pressure P2. If the first pressure difference ∆P1 is less than a predetermined threshold value α (a pressure difference threshold value), the displacement of the impingement spot of urea water at the present injection in relation to the impingement spot at the previous urea water injection is small. It is thus determined that the temperature is likely to drop at the urea water impingement spot on the dispersion plate 60, and the pressure difference increasing process is executed.

In the pressure difference increasing process, a third injection pressure P3 is calculated that is a value of the urea water injection pressure P in a case in which urea water is injected at a timing different from the specific injection timing TTH, which is calculated based on the injection cycle PR. The urea water injection timing TT of the present injection is determined as an injection timing that is different from the specified injection timing TTH and at which a second pressure difference ∆P2, which is the absolute value of the difference between the third injection pressure P3 and the first injection pressure P1, exceeds the first pressure difference ∆P1.

Specifically, the injection timing at which the second pressure difference ∆P2 is maximized, is searched for, and the found injection timing is set as the urea water injection timing TT of the present injection. The injection timing TT is a second timing that is different from the specified injection timing TTH, which is calculated from the injection cycle PR, and corresponds to an injection timing at which the second pressure difference ∆P2 exceeds the first pressure difference ∆P1.

When the injection timing TT is searched for, a first estimated value SP1 and a second estimated value SP2 are calculated. The first estimated value SP1 is an estimated value of the injection pressure P in a case in which injection is executed at the first inflection point of the urea pressure NP after the specified injection timing TTH. The second estimated value SP2 is an estimated value of the injection pressure P in a case in which injection is executed at the second inflection point of the urea pressure NP. The first estimated value SP1 is equal to the urea pressure NP at the first inflection point, and the second estimated value SP2 is equal to the urea pressure NP at the second inflection point. The first estimated value SP1 and the second estimated value SP2 correspond to the third injection pressure P3, which is the urea water injection pressure P in a case in which urea water is injected at the second timing, which is different from the specific injection timing TTH, which is calculated based on the injection cycle PR.

A first estimated pressure difference ∆PP1 and a second estimated pressure difference ∆PP2 are calculated. The first estimated pressure difference ∆PP1 is the absolute value of the difference between the first injection pressure P1 and the first estimated value SP1, and the second estimated pressure difference ∆PP2 is the absolute value of the difference between the first injection pressure P1 and the second estimated value SP2. The first estimated pressure difference ∆PP1 at the first inflection point and the second estimated pressure difference ∆PP2 at the second inflection point are compared, and a timing TM that corresponds to the inflection point of the greater estimated pressure difference is set as the injection timing TT at which the second pressure difference ∆P2 is maximized. When setting the injection timing TT, a time period is calculated that is between the specified injection timing TTH and the timing TM, which corresponds to the inflection point of the urea pressure NP of the greater value of the first estimated pressure difference ∆PP1 and the second estimated pressure difference ∆PP2. The calculated time period is set as a delay time RT, which is added to the specified injection timing TTH. The result is set as the injection timing TT of the present injection.

The urea pressure NP at the first inflection point and the urea pressure NP at the second inflection point are both the urea pressure when the pressure change is maximized in a single change cycle of the urea pressure NP. The greater one of the first estimated pressure difference ∆PP1 and the second estimated pressure difference ∆PP2, each of which is the absolute value of the difference between the first injection pressure P1 and the urea pressure NP at an inflection point, is greater than the first pressure difference ∆P1, which has been determined to be less than the threshold value α.

The execution of the pressure difference increasing process causes the absolute value of the pressure difference of the injection pressure P of the present injection to be greater than that in a case in which urea water is injected at the specified injection timing TTH, displacing the impingement spot of urea water.

To execute the pressure difference increasing process, the injection pressure P when the urea adding valve 230 is open needs to be estimated by estimating the urea pressure NP, which changes due to pressure pulsation. The control device 80 thus estimates the urea pressure NP based on the principle shown below.

Fig. 5 shows changes in the urea pressure NP due to pressure pulsation, that is, changes in the pressure of urea water in the vicinity of the urea adding valve 230.

As shown in Fig. 5, when the urea adding valve 230 is closed at a point in time t0, a pressure wave is generated in the urea water supply passage 240, which rapidly increases the urea pressure NP. The pressure wave is repeatedly reflected at opposite ends of the urea water supply passage 240, that is, between the joint with the urea adding valve 230 and the joint with the tank 210, so that the urea pressure NP is repeatedly and periodically increased and decreased. Such fluctuation of the urea pressure NP is gradually damped as the time elapses after the generation of the pressure wave. The length of the urea water supply passage 240 and the reflectivity of the pressure wave at the opposite ends of the urea water supply passage 240 are fixed values in each exhaust purifying apparatus. Thus, the injection pressure P of urea water, which changes due to influence of pressure pulsation, can be estimated based on the elapsed time PT from when the urea adding valve 230 is closed, that is, the elapsed time PT from when urea water injection ends during the injection cycle PR. Since the valve open time KT of the urea adding valve 230 is significantly short, the extent of decrease in the urea pressure is relatively small when the valve is open. Thus, the urea pressure NP at the point in time t0 is substantially equal to the urea pressure NP immediately before the urea adding valve 230 is opened, that is, the target value of the urea pressure NP. The extent of decrease in the urea pressure NP when the valve is open can be estimated based on the urea pressure NP and the valve open time KT prior to valve opening. Such estimation, if carried out, will improve the estimation accuracy of the urea pressure NP at the point in time t0.

The greater the bulk modulus of urea water, the greater the damping factor of the pressure pulsation in the urea water supply passage 240 becomes. In general, the density of urea water tends to increase as the temperature of the urea water is lowered, and the bulk modulus of urea water tends to increase as the density increases. Thus, as shown in Fig. 5, the lower the temperature of the urea water, the greater the damping factor of the pressure pulsation becomes. Also, the higher the temperature of the urea water, the smaller the damping factor of the pressure pulsation becomes. Since the temperature of the urea water in the urea water supply passage 240 is not constant, but changes, the damping factor changes accordingly.

Thus, the control device 80 calculates estimated values of the injection pressure P based on the elapsed time PT from when the urea adding valve 230 is closed and the urea water temperature THn, which affects the damping factor of the pressure pulsation. The estimated values of the injection pressure P can be calculated by obtaining a function expression having the elapsed time PT and the urea water temperature THn as variables or by establishing a map of pressure pulsation having the elapsed time PT and the urea water temperature THn as parameters.

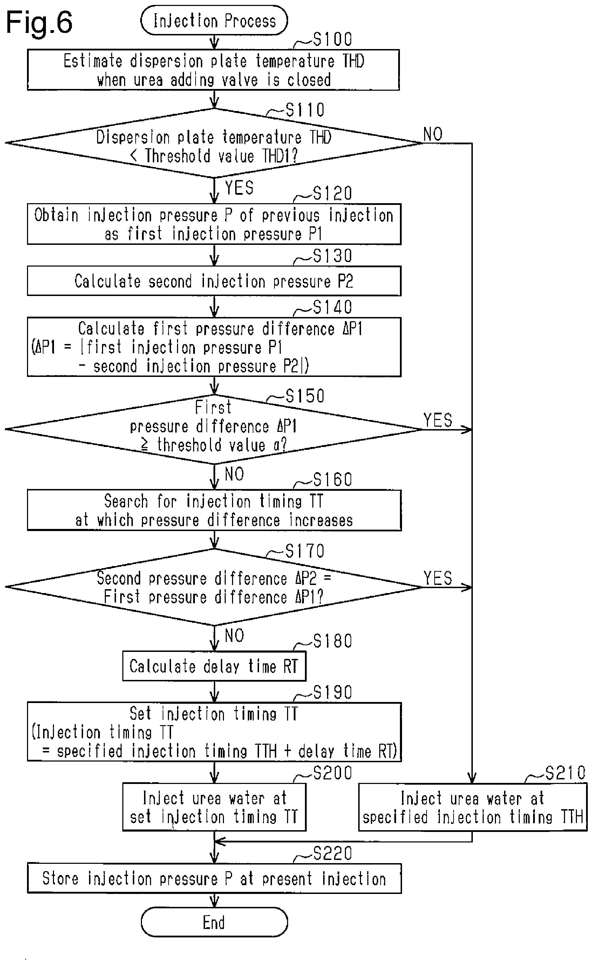

An injection process of urea water, in which the pressure difference increasing process is executed, will now be described as shown in Fig. 6. This process is repeatedly executed by the control device 80 at every predetermined cycle, which is shorter than the injection cycle PR. Various parameters related to the pressure difference increasing process, such as estimated values of the injection pressure and pressure differences, have already been described. The description of such parameters will not be repeated in the following description of the process.

When the process is started, the control device 80 estimates a dispersion plate temperature THD when the urea adding valve 230 is closed during the injection cycle PR (S100). At step S100, an estimated value of the dispersion plate temperature THD is calculated using the following expression (3) based on the second exhaust gas temperature TH2, which is the exhaust gas temperature in a section upstream of the dispersion plate 60, the heat transfer efficiency TR of the heat transferred from the exhaust gas to the dispersion plate 60, and the heat release amount HR of exhaust gas between the measurement position of the second exhaust gas temperature TH2 and the dispersion plate 60.

$$\text{Dispersion plate temperature THD} = \text{Second exhaust gas temperature TH2} \times \\ \text{Heat transfer efficiency TR} - \text{Heat release amount HR} \dots (3)$$

The heat transfer efficiency TR is determined based on the exhaust gas flow rate and the exhaust gas temperature.

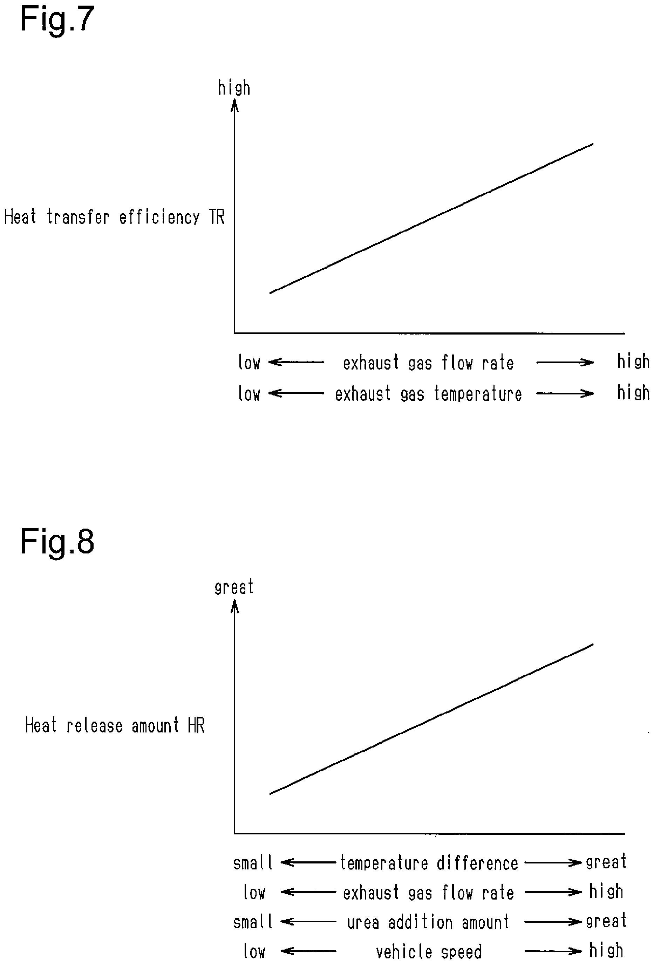

As shown in Fig. 7, the higher the exhaust gas flow rate, the higher the value of the heat transfer efficiency TR is set to be. Also, the higher the exhaust gas temperature, the higher the value of the heat transfer efficiency TR is set to be. The exhaust gas flow rate can be obtained from the engine operating state or the intake air amount GA. The second exhaust gas temperature TH2 is preferably used as the exhaust gas temperature.

The heat release amount HR is set based on the difference between the outside temperature THout and the second exhaust gas temperature TH2, the exhaust gas flow rate, the urea addition amount, and the vehicle speed SPD.

As shown in Fig. 8, the greater the difference between the outside temperature THout and the second exhaust gas temperature TH2, the greater the value of the heat release amount HR is set to be. Also, the higher the exhaust gas flow rate, the higher the value of the heat release amount HR is set to be. Further, the greater the urea addition amount, the higher the value of the heat release amount HR is set to be. In addition, the higher the vehicle speed SPD, the higher the value of the heat release amount HR is set to be.

Subsequently, the control device 80 determines whether the estimated dispersion plate temperature THD is less than a threshold value THD1 (S110). The threshold value THD1 is set to a value at which it can be determined that the temperature of the dispersion plate 60 has been increased to some extent and that temperature drop of the dispersion plate 60 due to impingement of urea water is not likely to occur. When the dispersion plate temperature THD is higher than or equal to the threshold value THD1 (S110: NO), the control device 80 sets, as the injection timing of the present injection, the specified injection timing TTH, which is obtained from the injection cycle PR, and injects urea water at the set timing (S210). At step S220, the control device 80 stores, in the nonvolatile memory 80a, the injection pressure P of the present injection, that is, the injection pressure P at the urea water injection at step S210, and temporarily ends the process.

In contrast, when the dispersion plate temperature THD is lower than the threshold value THD1 (S110: YES), the control device 80 obtains, as the first injection pressure P1, the injection pressure P of the previous injection stored in the nonvolatile memory 80a (S120).

Next, the control device 80 calculates the second injection pressure P2 in the above described manner of calculation (S130). That is, as shown in Fig. 4, the control device 80 calculates the second injection pressure P2, which is the injection pressure P in a case in which urea water is injected at the specified injection timing TTH, which is the urea water injection timing in the present injection cycle, based on the elapsed time PT from when the urea adding valve 230 is closed and the urea water temperature THn, which affects the damping factor of the pressure pulsation.

Next, the control device 80 calculates the first pressure difference ΔP1, which is the absolute value of the difference between the first injection pressure P1 obtained at step S120 and the second injection pressure P2 obtained at step S130 (S140), and determines whether the calculated first pressure difference ΔP1 is greater than or equal to the threshold value α (S150).

When the first pressure difference ΔP1 is greater than or equal to the threshold value α (S150: YES), the control device 80 sets, as the injection timing of the present injection, the specified injection timing TTH, which is obtained from the injection cycle PR, and injects urea water at the set timing (S210). At step S220, the control device 80 stores, in the nonvolatile memory 80a, the injection pressure P of the present injection, that is, the injection pressure P at the urea water injection at step S210, and temporarily ends the process.

In contrast, when the first pressure difference ΔP1 is less than the threshold value α (S150: NO), the control device 80 executes step S160 and the subsequent steps to execute the pressure difference increasing process.

First, the control device 80 searches for the injection timing TT at which the pressure difference is great in the above described manner (S160). That is, as shown in Fig. 4, the control device 80 calculates the first estimated value SP1, which is an estimated value of the injection pressure P in a case in which injection is performed at the first inflection point of the urea pressure NP after the specified injection timing TTH, based on the elapsed time PT from when the urea adding valve 230 is closed and the urea water temperature THn, which affects the damping factor of the pressure pulsation. That is, the control device 80 calculates the second estimated value SP2, which is an estimated value of the injection pressure P in a case in which injection is performed at the inflection point of the urea pressure NP after the first inflection point, based on the elapsed time PT from when the urea adding valve 230 is closed and the urea water temperature THn, which affects the damping factor of the pressure pulsation.

A first estimated pressure difference ΔPP1 and a second estimated pressure difference ΔPP2 are then calculated. The first estimated pressure difference ΔPP1 is the absolute value of the difference between the first injection pressure P1 and the first estimated value SP1, and the second estimated pressure difference ΔPP2 is the absolute value of the difference between the first injection pressure P1 and the second estimated value SP2. The first estimated pressure difference ΔPP1 at the first inflection point and the second estimated pressure difference ΔPP2 at the second inflection point are compared, and the timing TM that corresponds to the inflection point of the greater value is set as a timing at which the pressure difference is great, that is, the injection timing TT at which the second pressure difference ΔP2 (the absolute value of the difference between the first injection pressure P1 and the third injection pressure P3) is maximized.

Since the second pressure difference ΔP2, which has been calculated through execution of step S160, may be equal to the first pressure difference ΔP1, the control device 80 determines whether the second pressure difference ΔP2, which has been calculated through execution of step S160, is equal to the first pressure difference ΔP1 (S170).

When the second pressure difference ΔP2 is equal to the first pressure difference ΔP1 (S170: YES), the pressure difference will not change if the urea water injection timing is set to the specified injection timing TTH or the injection timing TT. Thus, the control device 80 executes step S210 and the subsequent steps described above.

In contrast, when the second pressure difference ΔP2 is different from the first pressure difference ΔP1 (S170: NO), the pressure difference can be increased by setting the urea water injection timing to the injection timing TT, which is different from the specified injection timing TTH.

Thus, the control device 80 calculates the delay time RT to obtain the injection timing TT (S180).

At step S180, the delay time RT is calculated as a time period between the specified injection timing TTH and the timing TM, which corresponds to the inflection point of the urea pressure NP of the greater value of the first estimated pressure difference ∆PP1 and the second estimated pressure difference ∆PP2.

The timing TM is calculated based on the elapsed time PT from when the urea adding valve 230 is closed. In other words, the timing TM is set with reference to the timing of closing of the urea adding valve 230. On the other hand, the specified injection timing TTH is set with reference to the timing of opening the urea adding valve 230 (more specifically, the timing of opening of the previous injection). Since the timing TM and the specified injection timing TTH use different timings of reference, the delay time RT cannot be calculated by subtracting the specified injection timing TTH from the timing TM.

Accordingly, to calculate the delay time RT at step S180, the control device 80 calculates time TA1 from the timing of closing of the urea adding valve 230 at the point in time t0 to the specified injection timing TTH, and calculates the delay time RT by subtracting the calculated time TA1 from elapsed time PT1, which corresponds to the timing TM.

Next, the control device 80 adds the delay time RT to the specified injection timing TTH to set the injection timing TT of the present injection (S190).

The control device 80 sets, as the injection timing of the present injection, the injection timing TT set at step S190, and injects urea water at the set timing (S200). At step S220, the control device 80 stores, in the nonvolatile memory 80a, the injection pressure P of the present injection, that is, the injection pressure P at the urea water injection at step S200, and temporarily ends the process.

The control device 80, which executes the injection process, functions as a temperature calculating section, which calculates the temperature of the dispersion plate 60, a first injection pressure obtaining section, which obtains, as the first injection pressure P1, the injection pressure P at the previous urea water injection, a second injection pressure calculating section, which calculates the second injection pressure P2, and a third injection pressure calculating section, which calculates the third injection pressure P3.

The present embodiment as described above achieves the following advantage.

(1) When the dispersion plate temperature THD is lower than the threshold value THD1, the first pressure difference ∆P1 is smaller than the threshold value α, and urea water injection at the injection timing TT, which is different from the specified injection timing TTH, will cause the second pressure difference ∆P2 to be greater than the first pressure difference ∆P1, the pressure difference increasing process is executed to set the injection timing TT as the urea water injection timing. Thus, when the first pressure difference ∆P1 is smaller than the threshold value α, so that it is determined that the displacement of the impingement spot of urea water in the present injection cycle from the impingement spot in the previous injection cycle will be small, the injection timing TT is set at which a pressure difference is generated that can enlarge the displacement of the impingement spot using pressure pulsation. Thus, when the temperature of the dispersion plate 60 is low, urea water is prevented from being continuously impinged on the same spot of the dispersion plate 60, which limits the temperature drop at the spot of a dispersion plate 60 on which urea water impinges.

(2) The pressure difference increasing process is executed to delay the urea water injection timing TT in relation to the specified injection timing TTH, which is obtained from the injection cycle PR. Compared to a case in which the urea water injection timing TT is advanced in relation to the specified injection timing TTH, which is obtained from the injection cycle PR, the calculation time for the injection timing TT is extended. This reduces the calculation load on the control device 80 when setting the urea water injection timing TT.

(3) The urea water injection timing at which the second pressure difference ∆P2 is maximized is calculated, and the urea water injection timing TT is delayed to the calculated injection timing. Thus, urea water is injected at the timing at which the absolute value of the difference between the injection pressure P of the previous injection and the injection pressure P of the present injection is maximized. Therefore, when the impingement spot of urea water is displaced using pressure pulsation in the urea water supply passage 240, the impingement spot of urea water at the present injection is maximally displaced from the impingement spot of urea water at the previous injection of urea water.

(4) In the injection cycle PR, it is determined whether the dispersion plate temperature THD when the urea adding valve 230 is closed is lower than the threshold value THD1. Thus, it is determined whether the temperature of the dispersion plate 60 is lower than the threshold value THD1 before the temperature of the dispersion plate 60 drops due to injection of urea water. Therefore, the pressure difference increasing process can be executed before the temperature of the dispersion plate 60 drops due to impingement of injected urea water. This reliably limits temperature drop of the dispersion plate 60.

(5) When the pressure difference increasing process is executed, the urea water injection timing is changed to be different from the specified injection timing TTH, which is obtained from the injection cycle PR. This may change the exhaust purification performance. For example, if the execution of the pressure difference increasing process sets the urea water injection timing TT of the present injection later than the specified injection timing TTH, the total amount of urea water to be injected by the urea adding valve 230 is likely to be insufficient in relation to the amount required to remove NOx in a period longer than the injection cycle PR. This may change the exhaust purification performance.

In this regard, in the above described embodiment, when the dispersion plate temperature THD is higher than or equal to the threshold value THD1 (S100: NO) and the temperature of the dispersion plate 60 is unlikely to be lowered by impingement of urea water, the urea water injection timing is set to the specified injection timing TTH, which is obtained from the predetermined injection cycle PR. Accordingly, urea water is injected at the predetermined injection cycle PR. This limits change in the exhaust purification performance due to change in the injection timing.

(6) When the first pressure difference $\Delta P1$ is greater than or equal to the threshold value $\alpha$ (S150: YES) and the impingement spot of urea water injected at the present injection cycle PR will be displaced by at least a certain extent from the impingement spot of urea water at the previous injection, the urea water injection timing is set to the specified injection timing TTH, which is obtained from the predetermined injection cycle PR. In this case also, urea water is injected at the predetermined injection cycle PR. This limits change in the exhaust purification performance due to change in the ignition timing described above.

(7) The second injection pressure P2 and the third injection pressure P3 are calculated based on the elapsed time PT from when the urea adding valve 230 is closed and the urea water temperature THn in the urea water supply passage 240. Therefore, the injection pressure P when there is pressure pulsation can be actually calculated, and the calculation accuracy of injection pressure P is improved.

(8) The dispersion plate temperature THD is calculated based on the exhaust gas temperature in the section upstream of the dispersion plate 60, the heat transfer efficiency TR of the heat transferred from exhaust gas to the dispersion plate 60, and the heat release amount HR in the range from the position where the exhaust gas temperature is measured to the dispersion plate 60. Since the temperature of the dispersion plate 60 is calculated taking into consideration the heat balance of the dispersion plate 60, the temperature of the dispersion plate 60 is calculated accurately.

(9) The urea adding valve 230 is located at a curved position of the exhaust passage 26. This increases the amount of change in the impingement spot of urea water when the pressure difference increasing process is executed, and thus further limits the temperature drop of the dispersion plate 60 due to impingement of urea water.


Second Embodiment

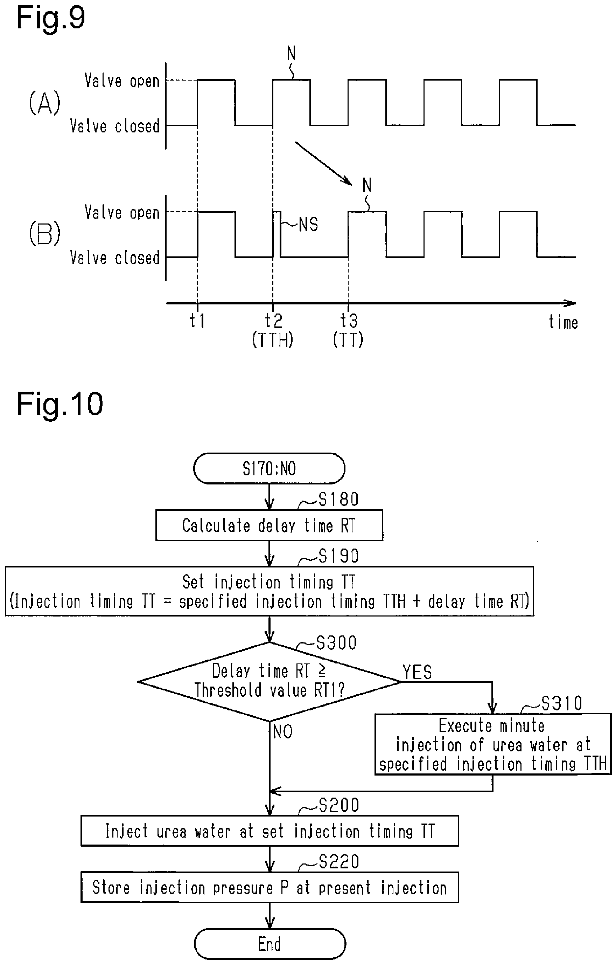

An exhaust purifying apparatus for an internal combustion engine according to a second embodiment will now be described with reference to Figs. 9 and 10.

Section (A) of Fig. 9 shows a manner in which the urea adding valve 230 injects urea water when urea water is added at each injection cycle PR. Section (B) of Fig. 9 shows a manner in which the urea adding valve 230 injects urea water when the execution of the pressure difference increasing process sets the urea water injection timing TT at the present injection later than the specified injection timing TTH.

As shown in Fig. 9, urea water N is originally supposed to be injected at a point in time t2 according to the setting of the specified injection timing TTH. The injection of the urea water N is delayed to a point in time t3 by setting of the injection timing TT through execution of the pressure difference increasing process. This may bring about the following drawbacks. That is, the total amount of urea water to be injected by the urea adding valve 230 in a period longer than the injection cycle PR is likely to be insufficient in relation to the amount required to remove NOx during the same period. This may lower the exhaust purification performance.

Accordingly, in the present embodiment, when delaying the urea water injection timing will decrease the total injection amount of urea water in a certain period to a level lower than the total injection amount required in the same period, the following process is executed. That is, as shown in section (B) of Fig. 9, a minute injection NS is executed in which an amount of urea water that is smaller than the amount of urea water injected at each injection cycle PR is injected at a timing earlier than the injection timing TT, which has been set by executing the pressure difference increasing process.

The urea water injection process of the present embodiment is carried out by altering a part of the injection process of Fig. 6. In the following, the injection process of the present embodiment will be described focusing on differences from the injection process of Fig. 6.

Fig. 10 shows a procedure of the injection process of the present embodiment.

In the present embodiment, when the determination result of step S170 in Fig. 6 is negative, step S180 is executed. At step S180, delay time RT for the injection timing is calculated. Next, the injecting timing TT of the present injection is set at step S190. Then, the control device 80 determines whether the set delay time RT is longer than or equal to a threshold value RT1 (S300). The threshold value RT1 is defined such that, when the delay time RT is longer than or equal to the threshold value RT1, it is possible to reliably determine that the amount of urea water injected by the urea adding valve 230 in a certain period is likely to be insufficient in relation to the amount required to remove NOx during the same period. Methods other than the method of determination using the delay time RT may be employed.

For example, the total injection amount of urea water in a certain period when the injecting timing of the present injection is delayed by execution of the pressure difference increasing process may be estimated, and whether the estimated total injection amount will be less than the total injection amount required in the same period may be determined.

When the delay time RT is less than the threshold value RT1 (S300: NO), the control device 80 sets, as the injection timing of the present injection, the injection timing TT set at step S190, and injects urea water at the set timing (S200) in the same manner as in the first embodiment. At step S220, the control device 80 stores, in the nonvolatile memory 80a, the injection pressure P of the present injection, that is, the injection pressure P at the urea water injection at step S200, and temporarily ends the process.

In contrast, when the delay time RT is longer than or equal to the threshold value RT1 (S300: YES), the control device 80 executes the minute urea water injection at the specified injection timing TTH (S310). After executing the minute injection, the control device 80 sets, as the injection timing of the present injection, the injection timing TT set at step S190, and injects urea water at the set timing (S200) in the same manner as in the first embodiment. At step S220, the control device 80 stores, in the nonvolatile memory 80a, the injection pressure P of the present injection, that is, the injection pressure P at the urea water injection at step S200, and temporarily ends the process.

The present embodiment as described above achieves the following advantage.

(10) When it is determined that the execution of the pressure difference increasing process will cause the total injection amount of urea water in a certain period to be less than the required total injection amount (S300: YES), the minute urea water injection is carried out. This compensates for the insufficiency of the injection amount of urea water in the same period.

The injection amount of urea water by the minute injection is set to be smaller than the amount of urea water injected at each injection cycle PR. Thus, excessive supply of urea water by the minute injection is avoided.

Third Embodiment

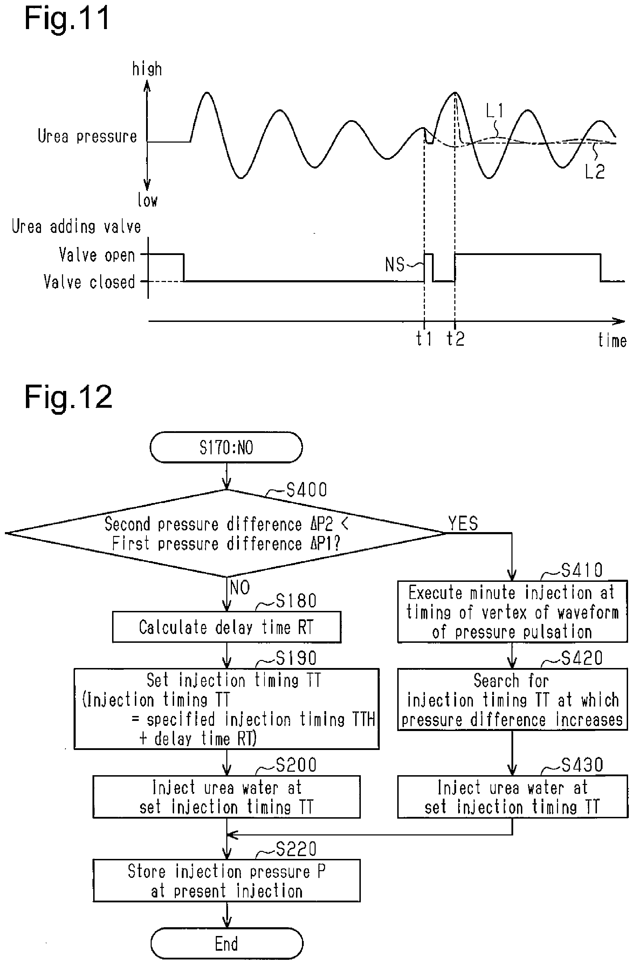

An exhaust purifying apparatus for an internal combustion engine according to a third embodiment will now be described with reference to Figs. 11 and 12.

Long dashed short dashed line L1 in Fig. 11 represents a case in which damping of the pressure pulsation in the urea water supply passage 240 continues. In this case, even if the urea water injection timing of the present injection is set to be different from the specified injection timing TTH, the second pressure difference $\Delta$P2 cannot be made greater than the first pressure difference $\Delta$P1.

Thus, in the present embodiment, if damping of pressure pulsation has progressed to a level at which the second pressure difference $\Delta$P2 cannot be made greater than the first pressure difference $\Delta$P1, a minute injection NS is executed in which an amount of urea water is injected that is smaller than the amount of urea water injected at each injection cycle PR. Execution of the minute injection NS generates pressure pulsation again in the urea water supply passage 240 as represented by the solid line in Fig. 11. This allows the second pressure difference $\Delta$P2 to be made greater than the first pressure difference $\Delta$P1.

The timing at which the urea pressure NP is switched from increasing to decreasing due to the pressure pulsation in the urea water supply passage 240, that is, the timing at which the waveform of the pressure pulsation forms a vertex is the same as the timing at which the pressure wave generated in the urea water supply passage 240 reaches the urea adding valve 230. Execution of the minute injection at such timing to open the urea adding valve 230 allows the pressure wave, which has reached the urea adding valve 230, to pass through the urea adding valve 230 without being reflected by the urea adding valve 230, and is released to the outside of the urea adding valve 230. The pressure wave thus disappears from the interior of the urea water supply passage 240 and the pressure pulsation subsides. This stabilizes the urea pressure NP in the urea water supply passage 240, improving the estimation accuracy when the injection pressure of urea water is estimated.

Thus, in the present embodiment, the minute injection is executed at the timing at which the urea pressure NP is switched from increasing to decreasing due to the pressure pulsation in the urea water supply passage 240 (a point in time t1 in Fig. 11) as shown in Fig 11.

As shown in Fig. 11, the pressure wave is generated by the minute injection at the point in time t1. Thereafter, when the urea injection is executed at the timing at which the urea pressure NP is switched from increasing to decreasing (the point in time t2), the pressure wave disappears for the same reason as the case in which the minute injection is executed at the point in time t1. Thus, as represented by long dashed double-short dashed line L2, the pressure pulsation subsides.

The urea water injection process of the present embodiment is carried out by altering a part of the injection process of Fig. 6. In the following, the injection process of the present embodiment will be described focusing on differences from the injection process of Fig. 6.

Fig. 12 shows a procedure of the injection process of the present embodiment.

In the present embodiment, when the determination result of step S170 in Fig. 6 is negative, the control device 80 determines whether the second pressure difference $\Delta P2$ is less than the first pressure difference $\Delta P1$ (S400). If the second pressure difference $\Delta P2$ is greater than or equal to the first pressure difference $\Delta P1$ (S400: NO), the control device 80 executes step S180 and the subsequent steps as in the first embodiment.

In contrast, if the second pressure difference $\Delta P2$ is less than the first pressure difference $\Delta P1$ (S400: YES), the control device 80 executes the minute urea water injection at the timing of a vertex of the waveform of the pressure pulsation (S410). Then, the control device 80 searches for the injection timing TT at which the pressure difference is great, in the same manner as step S160 (S420). Next, the control device 80 sets the found injection timing TT, at which the second pressure difference $\Delta P2$ is maximized, as the urea water injection timing and injects urea water at the set timing (S430). At step S220, the control device 80 stores, in the nonvolatile memory 80a, the injection pressure P of the present injection, that is, the injection pressure P at the urea water injection at step S430, and temporarily ends the process.

The present embodiment as described above achieves the following advantage.

(11) When the second pressure difference $\Delta P2$ cannot be made greater than the first pressure difference $\Delta P1$ due to damping of pressure pulsation, the minute injection is executed in which an amount of urea water is injected that is smaller than the amount of urea water injected at each injection cycle PR. This generates pressure pulsation again in the urea water supply passage 240, allowing the second pressure difference $\Delta P2$ to be made greater than the first pressure difference $\Delta P1$.

The injection amount of urea water by the minute injection is also set to be smaller than the amount of urea water injected at each injection cycle PR. Thus, excessive supply of urea water by the minute injection is avoided.

(12) The minute injection is executed at the timing at which the urea pressure NP, which is the pressure of urea water supplied to the urea adding valve 230, is switched from increasing to decreasing due to pressure pulsation in the urea water supply passage 240. Thus, the pressure wave disappears from the interior of the urea water supply passage 240 and the pressure pulsation subsides, which stabilizes the pressure of urea water in the urea water supply passage 240. This improves the estimation accuracy when the injection pressure P of urea water is estimated.

The embodiments described above may be modified as follows.

As represented by step S160 of Fig. 6, the first estimated pressure difference $\Delta PP1$ at the first inflection point and the second estimated pressure difference $\Delta PP2$ at the second inflection point are compared with each other, and the timing TM that corresponds to the inflection point of the greater pressure difference is set as the injection timing TT in the above illustrated embodiments.

Alternatively, when the first estimated pressure difference $\Delta PP1$ at the first inflection point and the second estimated pressure difference $\Delta PP2$ at the second inflection point are both greater than the first pressure difference $\Delta P1$, the first estimated pressure difference $\Delta PP1$ at the first inflection point and the second estimated pressure difference $\Delta PP2$ at the second inflection point may be compared to each other. The timing that corresponds to the inflection point of the smaller pressure difference may be set as the injection timing TT. Even in this case, at least the pressure difference at the urea water injection is greater than the first pressure difference $\Delta P1$. Thus, urea water is prevented from being continuously impinged on the same spot of the dispersion plate 60, which limits temperature drop at the spot of the dispersion plate 60 on which urea water impinges.

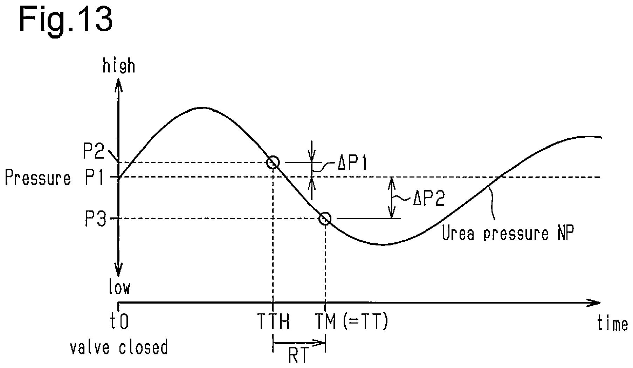

In the above illustrated embodiments, the urea water injection timing at which the second pressure difference $\Delta P2$ is maximized is estimated, and the urea water injection timing TT of the present injection is delayed to the estimated injection timing. Alternatively, as shown in Fig. 13, the urea water injection timing TT of the present injection may be retarded to the timing at which at least the second pressure difference $\Delta P2$ exceeds the first pressure difference $\Delta P1$. In this case, the advantages except for advantage (3) are obtained. In this modification, since it is only necessary that at least the second pressure difference $\Delta P2$ exceed the first pressure difference $\Delta P1$, the increased second pressure difference $\Delta P2$ may be less than the threshold value $\alpha$. That is, step S150 may be omitted. In this case, the urea water injection timing is set such that at least the second pressure difference $\Delta P2$ exceeds the first pressure difference $\Delta P1$. Thus, compared to a case in which the pressure difference increasing process is not executed, the displacement of the impingement spot of urea water at the present injection in relation to the impingement spot at the previous urea water injection can be increased. This limits temperature drop at the spot of the dispersion plate 60 on which urea water impinges.

In the above illustrated embodiments, the urea water injection timing is retarded to be later than the specified injection timing TTH so that the second pressure difference $\Delta P2$ exceeds the first pressure difference $\Delta P1$. Alternatively, the urea water injection timing may be advanced to be earlier than the specified injection timing TTH so that the second pressure difference $\Delta P2$ exceeds the first pressure difference $\Delta P1$. In this case, the advantages except for advantage (2) are obtained.

In the above described embodiments, when calculating the second injection pressure P2 and the third injection pressure P3, the urea water temperature THn may be omitted. Even in this case, the injection pressure P when pressure pulsation is occurring can be actually calculated.

In the above illustrated embodiments, the dispersion plate temperature THD when the urea adding valve 230 is closed in the injection cycle PR is estimated. However, the dispersion plate temperature THD at other timings may be estimated. In this case, the advantages except for advantage (4) are obtained.

In the above illustrated embodiments, the dispersion plate temperature THD is estimated based on the exhaust gas temperature in the section upstream of the dispersion plate 60, the heat transfer efficiency TR of the heat transferred from exhaust gas to the dispersion plate 60, and the heat release amount HR in the range from the position where the exhaust gas temperature is measured to the dispersion plate 60. However, the dispersion plate temperature THD may be estimated based on other parameters. Alternatively, the temperature of the dispersion plate 60 may be actually measured using a sensor.

In the second embodiment, the minute injection is executed at the specified injection timing TTH. However, the minute injection may be executed at other timings.

In the third embodiment, the minute injection is executed at the timing of the vertex of the waveform of the pressure pulsation. However, the minute injection may be executed at other timings. In this case, the advantages except for advantage (12) are obtained.

In the above illustrated embodiments, the urea adding valve 230 is located at a position where the exhaust passage 26 is curved. However, the urea adding valve 230 may be located at other positions, for example, in a linear section in the exhaust passage 26. Even in such sections in the exhaust passage 26, which are not curved, exhaust gas swirls or flows in an uneven manner, and the direction of urea water injection from the urea adding valve 230 is influenced by the stream of the exhaust gas. Therefore, even if the urea adding valve 230 is located at a position in the exhaust passage 26 other than the curved section, the execution of the pressure difference increasing process achieves the same advantages as the above illustrated embodiments and the modifications thereof.

Therefore, the present examples and embodiments are to be considered as illustrative and not restrictive and the invention is not to be limited to the details given herein, but may be modified within the scope of the appended claims.

**Claims**

1. An exhaust purifying apparatus for an internal combustion engine (1), comprising:

   an adding valve (5), which is arranged to inject urea water into an exhaust passage (26) of the internal combustion engine (1);
   a urea water supply passage (240) connected to the adding valve (5);
   a dispersion plate (60) provided in the exhaust passage (26), wherein urea water injected by the adding valve (5) impinges on the dispersion plate (60);
   a catalyst (41), which removes NOx in exhaust gas by using, as a reducing agent, ammonia generated from the urea water injected by the adding valve (5); and
   a controller (80), which is configured to set an injection timing of the urea water such that the urea water is repeatedly injected from the adding valve (5) at a predetermined injection cycle, thereby causing the adding valve (5) to execute urea water injection,
   the exhaust purifying apparatus being **characterized in that**
   the controller (80) includes:

      a temperature calculating section (80), which is configured to calculate a temperature of the dispersion plate (60);
      a memory section (80a), which is configured to store an injection pressure of the urea water at the urea water injection;
      a first injection pressure obtaining section (80), which is configured to obtain, as a first injection pressure, an injection pressure at a previous urea water injection stored in the memory section (80a);
      a second injection pressure calculating section (80), which is configured to calculate a second injection pressure, wherein the second injection pressure is an injection pressure of urea water obtained in a case in which the urea water is injected when time corresponding to the injection cycle has elapsed from the previous urea water injection; and
      a third injection pressure calculating section (80), which is configured to calculate a third injection pressure, wherein the third injection pressure is an injection pressure of urea water obtained in a case in which the urea water is injected at a second timing, which is different from a first timing, which is an injection timing obtained from the injection cycle,

the controller (80) is configured in use to execute a pressure difference increasing process when the temperature of the dispersion plate (60) calculated by the temperature calculating section (80) is lower than a predetermined temperature threshold value, a first pressure difference, which is an absolute value of a difference between the first injection pressure and the second injection pressure, is less than a pressure difference threshold value, and injection of the urea water at the second timing will cause a second pressure difference, which is an absolute value of a difference between the third injection pressure and the first injection pressure, to be greater than the first pressure difference, and

in the pressure difference increasing process, the controller (80) is configured to set, as the urea water injection timing, the second timing, which is a timing at which the second pressure difference exceeds the first pressure difference.

2. The exhaust purifying apparatus for an internal combustion engine (1) according to claim 1, wherein the controller (80) is configured to determine the temperature of the dispersion plate (60) when the adding valve (5) is closed in the injection cycle is lower than the temperature threshold value.

3. The exhaust purifying apparatus for an internal combustion engine (1) according to claim 1 or claim 2, wherein, when the temperature of the dispersion plate (60) is higher than or equal to the temperature threshold value, the controller (80) is configured to set the first timing as the urea water injection timing.

4. The exhaust purifying apparatus for an internal combustion engine (1) according to any one of claims 1 to 3, wherein, when the first pressure difference is greater than or equal to the pressure difference threshold value, the controller (80) is configured to set the first timing as the urea water injection timing.

5. The exhaust purifying apparatus for an internal combustion engine (1) according to any one of claims 1 to 4, wherein the second injection pressure calculating section (80) and the third injection pressure calculating section (80) are configured to respectively calculate the second injection pressure and the third injection pressure based on an elapsed time from when the adding valve (5) is closed.

6. The exhaust purifying apparatus for an internal combustion engine (1) according to claim 5, wherein the second injection pressure calculating section (80) and the third injection pressure calculating section (80) are configured to respectively calculate the second injection pressure and the third injection pressure based on the elapsed time and a urea water temperature in the urea water supply passage (240).

7. The exhaust purifying apparatus for an internal combustion engine (1) according to any one of claim 1 to 6, wherein the controller (80) is configured to execute, as the pressure difference increasing process, a process for delaying the urea water injection timing to be later than the first timing.

8. The exhaust purifying apparatus for an internal combustion engine (1) according to claim 7, wherein, when executing the process for delaying the urea water injection timing, the controller (80) is configured to calculate a urea water injection timing at which the second pressure difference is maximized and to delay the urea water injection timing to the calculated injection timing.

9. The exhaust purifying apparatus for an internal combustion engine (1) according to claim 7 or claim 8, wherein, when the execution of the process for delaying the urea water injection timing will decrease a total injection amount of the urea water in a certain period to a level lower than a total injection amount required in the same period, the controller (80) is configured to execute a minute injection, in which an amount of urea water that is smaller than the amount of urea water injected at each injection cycle is injected at a timing before the injection timing that has been set through the pressure difference increasing process.

10. The exhaust purifying apparatus for an internal combustion engine (1) according to any one of claims 1 to 8, wherein, when the second pressure difference cannot be increased to be greater than the first pressure difference, the controller (80) is configured to execute a minute injection, in which an amount of urea water that is smaller than the amount of urea water injected at each injection cycle is injected.

11. The exhaust purifying apparatus for an internal combustion engine (1) according to claim 10, wherein the controller (80) is configured to execute the minute injection at a timing at which a pressure of urea water supplied to the adding valve (5) is switched from increasing to decreasing due to a pressure pulsation in the urea water supply passage (240).

**12.** The exhaust purifying apparatus for an internal combustion engine (1) according to any one of claims 1 to 11, wherein the temperature calculating section (80) is configured to calculate the temperature of the dispersion plate (60) based on a temperature of exhaust gas in a section upstream of the dispersion plate (60), a heat transfer efficiency of heat transferred from exhaust gas to the dispersion plate (60), and a heat release amount in a range from a position where the exhaust gas temperature is measured to the dispersion plate (60).

**13.** The exhaust purifying apparatus for an internal combustion engine (1) according to any one of claims 1 to 12, wherein the adding valve (5) is located in a curved section of the exhaust passage (26).

**14.** A control method for an exhaust purifying apparatus for an internal combustion engine (1), said apparatus comprising:

an adding valve (5), which is arranged to inject urea water into an exhaust passage (26) of the internal combustion engine (1);
a urea water supply passage (240) connected to the adding valve (5);
a dispersion plate (60) provided in the exhaust passage (26), wherein urea water injected by the adding valve (5) impinges on the dispersion plate (60);
a catalyst (41), which removes NOx in exhaust gas by using, as a reducing agent, ammonia generated from the urea water injected by the adding valve (5); and
a controller (80), which is configured to set an injection timing of the urea water such that the urea water is repeatedly injected from the adding valve (5) at a predetermined injection cycle, thereby causing the adding valve (5) to execute urea water injection,
said method comprising the steps of:

a temperature calculating step, wherein a temperature calculating section (80) calculates a temperature of the dispersion plate (60);
a first injection pressure obtaining step, wherein a first injection pressure obtaining section (80) obtains, as a first injection pressure, an injection pressure at a previous urea water injection stored in a memory section (80a);
a second injection pressure calculating step, wherein a second injection pressure obtaining section (80) calculates a second injection pressure, wherein the second injection pressure is an injection pressure of urea water obtained in a case in which the urea water is injected when time corresponding to the injection cycle has elapsed from the previous urea water injection;
a third injection pressure calculating step, wherein a third injection pressure calculating section (80) is configured to calculate a third injection pressure, wherein the third injection pressure is an injection pressure of urea water obtained in a case in which the urea water is injected at a second timing, which is different from a first timing, which is an injection timing obtained from the injection cycle;
a pressure difference increasing step,

executed by a controller (80) when the temperature of the dispersion plate (60) calculated by the temperature calculating section (80) is lower than a predetermined temperature threshold value, a first pressure difference, which is an absolute value of a difference between the first injection pressure and the second injection pressure, is less than a pressure difference threshold value, and injection of the urea water at the second timing will cause a second pressure difference, which is an absolute value of a difference between the third injection pressure and the first injection pressure, to be greater than the first pressure difference,
wherein the controller (80) sets, as the urea water injection timing, the second timing, which is a timing at which the second pressure difference exceeds the first pressure difference.

**Patentansprüche**

**1.** Abgasreinigungsvorrichtung für eine Verbrennungskraftmaschine (1), aufweisend:

ein Beigabeventil (5), das so angeordnet ist, dass es Ureawasser in eine Abgasleitung (26) der Verbrennungskraftmaschine (1) einspritzt;
eine Ureawasserzuführleitung (240), die mit dem Beigabeventil (5) verbunden ist;
eine Dispersionsplatte (60), die sich in der Abgasleitung (26) befindet, wobei das von dem Beigabeventil (5) eingespritzte Ureawasser auf der Dispersionsplatte (60) auftrifft;

einen Katalysator (41), der NO$_x$ in einem Abgas durch Verwendung von Ammoniak als Reduktionsmittel entfernt, das aus dem Ureawasser, das von dem Beigabeventil (5) eingespritzt wird, erzeugt wird; und eine Steuerung (80), die so konfiguriert ist, dass sie einen Einspritzzeitpunkt des Ureawassers so einstellt, dass das Ureawasser in einem vorgegebenen Einspritzzyklus wiederholt von dem Beigabeventil (5) eingespritzt wird, wodurch das Beigabeventil (5) veranlasst wird, eine Ureawassereinspritzung auszuführen, wobei die Abgasreinigungsvorrichtung dadurch konfiguriert ist, dass die Steuerung (80) beinhaltet:

einen Temperaturberechnungsabschnitt (80), der so konfiguriert ist, dass er eine Temperatur der Dispersionsplatte (60) berechnet;

einen Speicherabschnitt (80a), der so konfiguriert ist, einen Einspritzdruck des Ureawassers bei der Ureawassereinspritzung zu speichern;

einen ersten Einspritzdruckerhaltungsabschnitt (80), der so konfiguriert ist, dass er als einen ersten Einspritzdruck einen Einspritzdruck bei einer vorherigen Ureawassereinspritzung erhält, die in dem Speicherabschnitt (80a) gespeichert ist;

einen zweiten Einspritzdruckberechnungsabschnitt (80), der so konfiguriert ist, dass er einen zweiten Einspritzdruck berechnet, wobei der zweite Einspritzdruck ein Einspritzdruck von Ureawasser ist, der in einem Fall erhalten wird, in dem das Ureawasser eingespritzt wird, wenn eine Zeit, die dem Einspritzzyklus entspricht, ab der vorherigen Ureawassereinspritzung verstrichen ist; und

einen dritten Einspritzdruckberechnungsabschnitt (80), der so konfiguriert ist, dass er einen dritten Einspritzdruck berechnet, wobei der dritte Einspritzdruck ein Einspritzdruck von Ureawasser ist, der in einem Fall erhalten wird, in dem das Ureawasser zu einem zweiten Zeitpunkt eingespritzt wird, der sich von einem ersten Zeitpunkt unterscheidet, bei dem es sich um einen Einspritzzeitpunkt handelt, der aus dem Einspritzzyklus erhalten wurde,

wobei die Steuerung (80) während der Verwendung so konfiguriert ist, dass sie einen Druckunterschiedserhöhungsvorgang ausführt, wenn die Temperatur der Dispersionsplatte (60), die durch den Temperaturberechnungsabschnitt (80) berechnet wird, niedriger ist als ein vorgegebener Temperaturschwellenwert, ein erster Druckunterschied, der ein Absolutwert eines Unterschieds zwischen dem ersten Einspritzdruck und dem zweiten Einspritzdruck ist, niedriger ist als ein Druckunterschiedsschwellenwert, und die Einspritzung des Ureawassers an dem zweiten Zeitpunkt einen zweiten Druckunterschied, der ein Absolutwert eines Unterschieds zwischen dem dritten Einspritzdruck und dem ersten Einspritzdruck ist, veranlassen wird, größer als der erste Druckunterschied zu sein, und

wobei bei dem Druckunterschiedserhöhungsvorgang die Steuerung (80) so konfiguriert ist, dass sie den zweiten Zeitpunkt als den Ureawassereinspritzzeitpunkt einstellt, der ein Zeitpunkt ist, bei dem der zweite Druckunterschied den ersten Druckunterschied übersteigt.

2. Abgasreinigungsvorrichtung für eine Verbrennungskraftmaschine (1) nach Anspruch 1, wobei die Steuerung (80) so konfiguriert ist, die Temperatur der Dispersionsplatte (60) bei geschlossenem Beigabeventil (5) in dem Einspritzzyklus niedriger als den Temperaturschwellenwert zu bestimmen.

3. Abgasreinigungsvorrichtung für eine Verbrennungskraftmaschine (1) nach Anspruch 1 oder 2, wobei, wenn die Temperatur der Dispersionsplatte (60) gleich oder höher als der Temperaturschwellenwert ist, die Steuerung (80) so konfiguriert ist, dass sie den ersten Zeitpunkt als den Ureawassereinspritzzeitpunkt einstellt.

4. Abgasreinigungsvorrichtung für eine Verbrennungskraftmaschine (1) nach einem der Ansprüche 1 bis 3, wobei, wenn der erste Druckunterschied gleich oder größer als der Druckunterschiedsschwellenwert ist, die Steuerung (80) so konfiguriert ist, dass sie den ersten Zeitpunkt als den Ureawassereinspritzzeitpunkt einstellt.

5. Abgasreinigungsvorrichtung für eine Verbrennungskraftmaschine (1) nach einem der Ansprüche 1 bis 4, wobei der zweite Einspritzdruckberechnungsabschnitt (80) und der dritte Einspritzdruckberechnungsabschnitt (80) so konfiguriert sind, dass sie den zweiten Einspritzdruck beziehungsweise den dritten Einspritzdruck auf Basis einer Zeit, die ab dem Zeitpunkt verstrichen ist, an dem das Beigabeventil (5) geschlossen wird.

6. Abgasreinigungsvorrichtung für eine Verbrennungskraftmaschine (1) nach Anspruch 5, wobei der zweite Einspritzdruckberechnungsabschnitt (80) und der dritte Einspritzdruckberechnungsabschnitt (80) so konfiguriert sind, dass sie den zweiten Einspritzdruck beziehungsweise den dritten Einspritzdruck auf Basis der verstrichenen Zeit und eine Ureawassertemperatur in der Ureawasserzuführleitung (240) berechnen.

7. Abgasreinigungsvorrichtung für eine Verbrennungskraftmaschine (1) nach einem der Ansprüche 1 bis 6, wobei die Steuerung (809 so konfiguriert ist, dass sie als den Druckunterschiedserhöhungsvorgang einen Vorgang zum Verzögern des Ureawassereinspritzzeitpunkts, so dass er später als der erste Zeitpunkt stattfindet, ausführt.

8. Abgasreinigungsvorrichtung für eine Verbrennungskraftmaschine (1) nach Anspruch 7, wobei, wenn der Vorgang zum Verzögern des Ureawassereinspritzzeitpunkts durchgeführt wird, die Steuerung (80) so konfiguriert ist, dass sie einen Ureawassereinspritzzeitpunkt berechnet, bei dem der zweite Druckunterschied maximiert wird, und den Ureawassereinspritzzeitpunkt auf den berechneten Einspritzzeitpunkt verzögert.

9. Abgasreinigungsvorrichtung für eine Verbrennungskraftmaschine (1) nach Anspruch 7 oder 8, wobei, wenn die Durchführung des Vorgangs zum Verzögern des Ureawassereinspritzzeitpunkts eine Gesamteinspritzmenge des Ureawassers in einer bestimmten Zeitspanne auf ein Niveau unterhalb einer Gesamteinspritzmenge verringert, die in derselben Zeitspanne benötigt wird, die Steuerung (80) so konfiguriert ist, dass sie eine Minuteneinspritzung durchführt, bei der eine Menge an Ureawasser, die geringer ist als die Menge an Ureawasser, die bei jedem Einspritzzyklus eingespritzt wird, zu einem Zeitpunkt vor dem Einspritzzeitpunkt, der durch den Druckdifferenzerhöhungsvorgang eingestellt wurde, eingespritzt wird.

10. Abgasreinigungsvorrichtung für eine Verbrennungskraftmaschine (1) nach einem der Ansprüche 1 bis 8, wobei, wenn der zweite Druckunterschied nicht auf einen Wert größer als der erste Druckunterschied erhöht werden kann, die Steuerung (80) so konfiguriert ist, dass sie eine Minuteneinspritzung durchführt, bei der eine Menge an Ureawasser eingespritzt wird, die geringer ist als die Menge an Ureawasser, die bei jedem Einspritzzyklus eingespritzt wird.

11. Abgasreinigungsvorrichtung für eine Verbrennungskraftmaschine (1) nach Anspruch 10, wobei die Steuerung (80) so konfiguriert ist, dass sie die Minuteneinspritzung zu einem Zeitpunkt durchführt, an dem ein Druck des Ureawassers, das dem Beigabeventil (5) zugeführt wird, aufgrund einer Druckpulsation in der Ureawasserzuführleitung (240) von zunehmend auf abnehmend geschaltet wird.

12. Abgasreinigungsvorrichtung für eine Verbrennungskraftmaschine (1) nach einem der Ansprüche 1 bis 11, wobei der Temperaturberechnungsabschnitt (80) so konfiguriert ist, dass er die Temperatur der Dispersionsplatte (60) auf Basis einer Temperatur des Abgases in einem Abschnitt stromaufwärts von der Dispersionsplatte (60), eines Wärmeübertragungswirkungsgrads der von dem Abgas an die Dispersionsplatte (60) übertragenen Wärme, und einer Wärmeabgabemenge in einem Bereich von einer Position, wo die Abgastemperatur gemessen wird, bis zu der Dispersionsplatte (60) berechnet.

13. Abgasreinigungsvorrichtung für eine Verbrennungskraftmaschine (1) nach einem der Ansprüche 1 bis 12, wobei sich das Beigabeventil (5) in einem gekrümmten Abschnitt der Abgasleitung (26) befindet.

14. Steuerverfahren für eine Abgasreinigungsvorrichtung für eine Verbrennungskraftmaschine (1), wobei die Vorrichtung aufweist:

ein Beigabeventil (5), das so angeordnet ist, dass es Ureawasser in eine Abgasleitung (26) der Verbrennungskraftmaschine (1) einspritzt;
eine Ureawasserzuführleitung (240), die mit dem Beigabeventil (5) verbunden ist;
eine Dispersionsplatte (60), die sich in der Abgasleitung (26) befindet, wobei das von dem Beigabeventil (5) eingespritzte Ureawasser auf der Dispersionsplatte (60) auftrifft;
einen Katalysator (41), der $NO_x$ in einem Abgas durch Verwendung von Ammoniak als Reduktionsmittel entfernt, das aus dem Ureawasser, das von dem Beigabeventil (5) eingespritzt wird, erzeugt wird; und
eine Steuerung (80), die so konfiguriert ist, dass sie einen Einspritzzeitpunkt des Ureawassers so einstellt, dass das Ureawasser in einem vorgegebenen Einspritzzyklus wiederholt von dem Beigabeventil (5) eingespritzt wird, wodurch das Beigabeventil (5) veranlasst wird, eine Ureawassereinspritzung auszuführen,
wobei das Verfahren die folgenden Schritte aufweist:

einen Temperaturberechnungsschritt, wobei ein Temperaturberechnungsabschnitt (80) eine Temperatur der Dispersionsplatte (60) berechnet;
einen ersten Einspritzdruckerhaltungsschritt, wobei ein erster Einspritzdruckerhaltungsabschnitt (80) als einen ersten Einspritzdruck einen Einspritzdruck bei einer vorherigen Ureawassereinspritzung, die in einem Speicherabschnitt (80a) gespeichert ist, erhält;
einen zweiten Einspritzdruckberechnungsschritt, wobei ein zweiter Einspritzdruckerhaltungsschritt (80) einen zweiten Einspritzdruck berechnet, wobei der zweite Einspritzdruck ein Einspritzdruck von Ureawasser ist, der in einem Fall erhalten wird, in dem das Ureawasser eingespritzt wird, wenn eine Zeit, die dem Einspritzzyklus entspricht, ab der vorherigen Ureawassereinspritzung verstrichen ist;

einen dritten Einspritzdruckberechnungsschritt, wobei ein dritter Einspritzdruckberechnungsabschnitt (80) so konfiguriert ist, dass er einen dritten Einspritzdruck berechnet, wobei der dritte Einspritzdruck ein Einspritzdruck von Ureawasser ist, der in einem Fall erhalten wird, in dem das Ureawasser zu einem zweiten Zeitpunkt eingespritzt wird, der sich von einem ersten Zeitpunkt unterscheidet, bei dem es sich um einen Einspritzzeitpunkt handelt, der aus dem Einspritzzyklus erhalten wurde;

einen Druckdifferenzerhöhungsschritt,

der von einer Steuerung (80) durchgeführt wird, wenn die Temperatur der Dispersionsplatte (80), die durch den Temperaturberechnungsabschnitt (80) berechnet wird, niedriger ist als ein vorgegebener Temperaturschwellenwert, ein erster Druckunterschied, der ein Absolutwert eines Unterschieds zwischen dem ersten Einspritzdruck und dem zweiten Einspritzdruck ist, niedriger ist als ein Druckunterschiedsschwellenwert, und die Einspritzung des Ureawassers an dem zweiten Zeitpunkt einen zweiten Druckunterschied, der ein Absolutwert eines Unterschieds zwischen dem dritten Einspritzdruck und dem ersten Einspritzdruck ist, veranlasst wird, größer als der erste Druckunterschied zu sein,

wobei die Steuerung (80) als den Ureawassereinspritzzeitpunkt den zweiten Zeitpunkt einstellt, bei dem es sich um einen Zeitpunkt handelt, an dem der zweite Druckunterschied den ersten Druckunterschied überschreitet.

## Revendications

1. Appareil de purification d'échappement pour un moteur à combustion interne (1) comprenant :

une soupape d'addition (5), qui est agencée pour injecter de l'eau d'urée dans un passage d'échappement (26) du moteur à combustion interne (1) ;
un passage d'alimentation en eau d'urée (240) raccordé à la soupape d'addition (5) ;
une plaque de dispersion (60) prévue dans le passage d'échappement (26), dans lequel l'eau d'urée injectée par la soupape d'addition (5) empiète sur la plaque de dispersion (60) ;
un catalyseur (41) qui extrait les NOx dans le gaz d'échappement en utilisant, en tant qu'agent de réduction, de l'ammoniac généré à partir de l'eau d'urée injectée par la soupape d'addition (5) ; et
un organe de commande (80), qui est configuré pour déterminer un temps d'injection de l'eau d'urée de sorte que l'eau d'urée est injectée, à plusieurs reprises, à partir de la soupape d'addition (5) dans un cycle d'injection prédéterminé, amenant ainsi la soupape d'addition (5) à exécuter l'injection d'eau d'urée,
l'appareil de purification d'échappement étant **caractérisé en ce que** :

l'organe de commande (80) comprend :

une section de calcul de température (80) qui est configurée pour calculer une température de la plaque de dispersion (60) ;
une section de mémoire (80a) qui est configurée pour stocker une pression d'injection de l'eau d'urée, à l'injection d'eau d'urée ;
une première section d'obtention de pression d'injection (80), qui est configurée pour obtenir, en tant que première pression d'injection, une pression d'injection à une précédente injection d'eau d'urée stockée dans la section de mémoire (80a) ;
une deuxième section de calcul de pression d'injection (80), qui est configurée pour calculer une deuxième pression d'injection, dans lequel la deuxième pression d'injection est une pression d'injection d'eau d'urée obtenue dans un cas dans lequel l'eau d'urée est injectée lorsque le temps correspondant au cycle d'injection s'est écoulé depuis la précédente injection d'eau d'urée ; et
une troisième section de calcul de pression d'injection (80), qui est configurée pour calculer une troisième pression d'injection, dans lequel la troisième pression d'injection est une pression d'injection d'eau d'urée obtenue dans un cas dans lequel l'eau d'urée est injectée dans un second temps, qui est différent du premier temps, qui est un temps d'injection obtenu à partir du cycle d'injection,
l'organe de commande (80) est configuré pour utiliser un processus d'augmentation de différence de pression lorsque la température de la plaque de dispersion (60) calculée par la section de calcul de température (80) est inférieure à une valeur de seuil de température prédéterminée, une première différence de pression, qui est une valeur absolue d'une différence entre la première pression d'injection et la deuxième pression d'injection, est inférieure à une valeur de seuil de différence de pression, et l'injection de l'eau d'urée dans le second temps amène une seconde différence de pression, qui est une valeur absolue d'une différence entre la troisième pression d'injection et la première pression d'injection, à être supérieure à la première différence de pression, et

dans le processus d'augmentation de différence de pression, l'organe de commande (80) est configuré pour déterminer, en tant que temps d'injection d'eau d'urée, le second temps, qui est un temps auquel la seconde différence de pression est supérieure à la première différence de pression.

2. Appareil de purification de gaz d'échappement pour un moteur à combustion interne (1) selon la revendication 1, dans lequel l'organe de commande (80) est configuré pour déterminer que la température de la plaque de dispersion (60) lorsque la soupape d'addition (5) est fermée dans le cycle d'injection, est inférieure à la valeur de seuil de température.

3. Appareil de purification de gaz d'échappement pour un moteur à combustion interne (1) selon la revendication 1 ou la revendication 2, dans lequel, lorsque la température de la plaque de dispersion (60) est supérieure ou égale à la valeur de seuil de température, l'organe de commande (80) est configuré pour déterminer le premier temps comme étant le temps d'injection d'eau d'urée.

4. Appareil de purification de gaz d'échappement pour un moteur à combustion interne (1) selon l'une quelconque des revendications 1 à 3, dans lequel, lorsque la première différence de pression est supérieure ou égale à la valeur de seuil de différence de pression, l'organe de commande (80) est configuré pour déterminer le premier temps comme étant le temps d'injection d'eau d'urée.

5. Appareil de purification de gaz d'échappement pour un moteur à combustion interne (1) selon l'une quelconque des revendications 1 à 4, dans lequel la deuxième section de calcul de pression d'injection (80) et la troisième section de calcul de pression d'injection (80) sont configurées pour calculer respectivement la deuxième pression d'injection et la troisième pression d'injection en fonction d'un temps écoulé à partir du moment où la soupape d'addition (5) est fermée.

6. Appareil de purification de gaz d'échappement pour un moteur à combustion interne (1) selon la revendication 5, dans lequel la deuxième section de calcul de pression d'injection (80), et la troisième section de calcul de pression d'injection (80) sont configurées pour calculer respectivement la deuxième pression d'injection et la troisième pression d'injection en fonction du temps écoulé et d'une température d'eau d'urée dans le passage d'alimentation en eau d'urée (240).

7. Appareil de purification de gaz d'échappement pour un moteur à combustion interne (1) selon l'une quelconque des revendications 1 à 6, dans lequel l'organe de commande (80) est configuré pour exécuter, en tant que processus d'augmentation de différence de pression, un processus pour retarder pour que le temps d'injection d'eau d'urée ait lieu plus tard que le premier temps.

8. Appareil de purification de gaz d'échappement pour un moteur à combustion interne (1) selon la revendication 7, dans lequel, lors de l'exécution du processus pour retarder le temps d'injection d'eau d'urée, l'organe de commande (80) est configuré pour calculer un temps d'injection d'eau d'urée auquel la deuxième différence de pression est maximisée et pour retarder le temps d'injection d'eau d'urée au temps d'injection calculé.

9. Appareil de purification de gaz d'échappement pour un moteur à combustion interne (1) selon la revendication 7 ou la revendication 8, dans lequel, lorsque l'exécution du processus pour retarder le temps d'injection d'eau d'urée diminue une quantité d'injection totale de l'eau d'urée dans une certaine période à un niveau inférieur à une quantité d'injection totale requise dans la même période, l'organe de commande (80) est configuré pour exécuter une minuscule injection, dans laquelle une quantité d'eau d'urée qui est inférieure à la quantité d'eau d'urée injectée à chaque cycle d'injection, est injectée à un temps avant le temps d'injection qui a été déterminé par le biais du processus d'augmentation de différence de pression.

10. Appareil de purification de gaz d'échappement pour un moteur à combustion interne (1) selon l'une quelconque des revendications 1 à 8, dans lequel, lorsque la deuxième différence de pression ne peut pas être augmentée pour être supérieure à la première différence de pression, l'organe de commande (80) est configuré pour exécuter une minuscule injection, dans laquelle une quantité d'eau d'urée qui est inférieure à la quantité d'eau d'urée injectée à chaque cycle d'injection, est injectée.

**11.** Appareil de purification de gaz d'échappement pour un moteur à combustion interne (1) selon la revendication 10, dans lequel l'organe de commande (80) est configuré pour exécuter la minuscule injection à un moment auquel une pression d'eau d'urée amenée à la soupape d'addition (5) passe de l'augmentation à la réduction en raison d'une pulsation de pression dans le passage d'alimentation en eau d'urée (240).

**12.** Appareil de purification de gaz d'échappement pour un moteur à combustion interne (1) selon l'une quelconque des revendications 1 à 11, dans lequel la section de calcul de température (80) est configurée pour calculer la température de la plaque de dispersion (60) en fonction d'une température du gaz d'échappement dans une section en amont de la plaque de dispersion (60), d'une efficacité de transfert de la chaleur transférée du gaz d'échappement à la plaque de dispersion (60), et une quantité de libération de chaleur dans une plage allant d'une position dans laquelle la température de gaz d'échappement est mesurée, jusqu'à la plaque de dispersion (60).

**13.** Appareil de purification de gaz d'échappement pour un moteur à combustion interne (1) selon l'une quelconque des revendications 1 à 12, dans lequel la soupape d'addition (5) est positionnée dans une section incurvée du passage d'échappement (26).

**14.** Procédé de commande pour un appareil de purification d'échappement pour un moteur à combustion interne (1), ledit appareil comprenant :

une soupape d'addition (5), qui est agencée pour injecter de l'eau d'urée dans un passage d'échappement (26) du moteur à combustion interne (1) ;
un passage d'alimentation en eau d'urée (240) raccordé à la soupape d'addition (5) ;
une plaque de dispersion (60) prévue dans le passage d'échappement (26), dans lequel l'eau d'urée injectée par la soupape d'addition (5) empiète sur la plaque de dispersion (60) ;
un catalyseur (41) qui extrait les NOx dans le gaz d'échappement en utilisant, en tant qu'agent de réduction, de l'ammoniac généré à partir de l'eau d'urée injectée par la soupape d'addition (5) ; et
un organe de commande (80), qui est configuré pour déterminer un temps d'injection de l'eau d'urée de sorte que l'eau d'urée est injectée, à plusieurs reprises, à partir de la soupape d'addition (5) dans un cycle d'injection prédéterminé, amenant ainsi la soupape d'addition (5) à exécuter l'injection d'eau d'urée,
ledit procédé comprenant les étapes suivantes :

une étape de calcul de température, dans laquelle une section de calcul de température (80) calcule une température de la plaque de dispersion (60) ;
une première étape d'obtention de pression d'injection, dans laquelle une première section d'obtention de pression d'injection (80) obtient, en tant que première pression d'injection, une pression d'injection à une précédente injection d'eau d'urée stockée dans une section de mémoire (80a) ;
une deuxième étape de calcul de pression d'injection, dans laquelle une deuxième section d'obtention de pression d'injection (80) calcule une deuxième pression d'injection, dans laquelle la deuxième pression d'injection est une pression d'injection de l'eau d'urée obtenue dans un cas dans lequel l'eau d'urée est injectée lorsque le temps correspondant au cycle d'injection s'est écoulé depuis la précédente injection d'eau d'urée ;
une troisième étape de calcul de pression d'injection, dans laquelle une troisième section de calcul de pression d'injection (80) est configurée pour calculer une troisième pression d'injection, dans laquelle la troisième pression d'injection est une pression d'injection d'eau d'urée obtenue dans un cas dans lequel l'eau d'urée est injectée dans un second temps, qui est différent du premier temps, qui est un temps d'injection obtenu à partir du cycle d'injection ;
une étape d'augmentation de différence de pression, exécutée par un organe de commande (80), lorsque la température de la plaque de dispersion (60) calculée par la section de calcul de température (80) est inférieure à une valeur de seuil de température prédéterminée, une première différence de pression, qui est une valeur absolue d'une différence entre la première pression d'injection et la deuxième pression d'injection, est inférieure à une valeur de seuil de différence de pression, et l'injection de l'eau d'urée dans le second temps amène une deuxième différence de pression, qui est une valeur absolue d'une différence entre la troisième pression d'injection et la première pression d'injection, à être supérieure à la première différence de pression,
dans lequel l'organe de commande (80) détermine, en tant que temps d'injection d'eau d'urée, le second temps, qui est un temps auquel la deuxième différence de pression dépasse la première différence de pression.

Fig.1

# Fig.2

Valve Open Time KT

Valve open .....

Valve closed

KT | KT | KT | KT | KT

PR (one cycle) | PR | PR | | PR

1 second

Injection Cycle PR

time

# Fig.3

Exhaust gas

At high pressure

240   230

At low pressure   26   60

# Fig.4

# Fig.5

Elapsed time PT from timing at which injection ends

**Fig.6**

$\boxed{\text{Injection Process}}$ ~S100

Estimate dispersion plate temperature THD
when urea adding valve is closed

~S110

Dispersion plate temperature THD
< Threshold value THD1? —— NO ——→

YES ~S120

Obtain injection pressure P of previous injection
as first injection pressure P1

~S130

Calculate second injection pressure P2

~S140

Calculate first pressure difference ΔP1
(ΔP1 = |first injection pressure P1
 - second injection pressure P2|)

~S150

First
pressure difference ΔP1
≥ threshold value α? —— YES ——→

NO ~S160

Search for injection timing TT
at which pressure difference increases

~S170

Second pressure difference ΔP2 =
First pressure difference ΔP1? —— YES ——→

NO ~S180

Calculate delay time RT

~S190

Set injection timing TT
(Injection timing TT
 = specified injection timing TTH + delay time RT)

~S200                                    ~S210

| Inject urea water at set injection timing TT | Inject urea water at specified injection timing TTH |

~S220

Store injection pressure P at present injection

$\boxed{\text{End}}$

## Fig.7

Heat transfer efficiency TR (vertical axis, high)

low ⟵ exhaust gas flow rate ⟶ high
low ⟵ exhaust gas temperature ⟶ high

## Fig.8

Heat release amount HR (vertical axis, great)

small ⟵ temperature difference ⟶ great
low ⟵ exhaust gas flow rate ⟶ high
small ⟵ urea addition amount ⟶ great
low ⟵ vehicle speed ⟶ high

# Fig.9

(A)

Valve open

Valve closed

N

(B)

Valve open

Valve closed

NS

N

t1    t2    t3    time
     (TTH)  (TT)

# Fig.10

```
         S170:NO

            │  ~S180
   ┌─────────────────────┐
   │ Calculate delay time RT │
   └─────────────────────┘
            │  ~S190
┌──────────────────────────────────────────────────┐
│          Set injection timing TT                   │
│ (Injection timing TT = specified injection timing TTH + delay time RT) │
└──────────────────────────────────────────────────┘
            │  ~S300
         ╱─────────────╲          YES
        ╱ Delay time RT ≧ ╲──────────────┐
        ╲ Threshold value RT1? ╱          │  ~S310
         ╲─────────────╱       ┌──────────────────────┐
            │ NO                │    Execute minute     │
            │                   │ injection of urea water at │
            │                   │ specified injection timing TTH │
            │                   └──────────────────────┘
            │◄──────────────────────────┘
            │  ~S200
   ┌──────────────────────────────┐
   │ Inject urea water at set injection timing TT │
   └──────────────────────────────┘
            │  ~S220
   ┌──────────────────────────────┐
   │ Store injection pressure P at present injection │
   └──────────────────────────────┘
            │
           End
```

27

# Fig.11

# Fig.12

# Fig.13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013142309 A

- WO 2015015260 A1